(19) Europäisches Patentamt
European Patent Office
Office européen des brevets

(11) **EP 4 625 262 A1**

(12) **EUROPEAN PATENT APPLICATION**

(43) Date of publication:
01.10.2025 Bulletin 2025/40

(21) Application number: 24183694.9

(22) Date of filing: 21.06.2024

(51) International Patent Classification (IPC):
*G06N 5/01* (2023.01)     *G06N 10/80* (2022.01)
*G06N 3/0442* (2023.01)     *G06N 3/047* (2023.01)
*G06N 3/084* (2023.01)     *G06N 3/088* (2023.01)
*G06N 3/0455* (2023.01)     *G06N 10/20* (2022.01)
*G06N 10/60* (2022.01)

(52) Cooperative Patent Classification (CPC):
**G06N 3/0442; G06N 3/047; G06N 3/084;**
**G06N 3/088; G06N 5/01; G06N 10/80;**
G06N 3/0455; G06N 10/20; G06N 10/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 27.03.2024 US 202418618945

(71) Applicant: **Yiyaniq Inc.**
**Toronto, ON M4V 2J5 (CA)**

(72) Inventors:
• **INACK, Estelle M.**
**Waterloo, Ontario, N2L 2Y6 (CA)**
• **JAVANPARAST, Behnam**
**Toronto, Ontario, M4V 0A3 (CA)**

(74) Representative: **Barker Brettell LLP**
**100 Hagley Road**
**Edgbaston**
**Birmingham B16 8QQ (GB)**

(54) **SYSTEM AND METHOD FOR SIMULATED QUANTUM ANNEALING TO SOLVE OPTIMIZATION PROBLEMS**

(57) System and method for simulated quantum annealing to solve optimization problems. The method comprises performing simulated quantum annealing by: generating quantum annealing simulations of an objective function that represents an optimization problem by initializing a guiding wave function with a variational ansatz, wherein the guiding wave function represents a ground state wave function of a quantum optimization Hamiltonian that the objective function represented as a classical Hamiltonian and a non-commutating driving term causing quantum fluctuations; stochastically evolving the quantum annealing simulations under a time-dependent driving schedule according to an imaginary-time Schrödinger equation supplemented by the guiding wave function until a predetermined condition is met; and outputting a plurality of output states responsive to the predetermined condition being met, each output state representing a solution to the optimization problem of the application-specific parameters within the application-specific constraints.

400

Generate or receive objective function representing an optimization problem — 402

Receive initial input values — 404

Generate a simulation of the objective function by initializing a guiding wave function with a variational ansatz — 408

Stochastically evolve the quantum annealing simulations until a predetermined condition is met — 410

Output a plurality of output states, each output state representing a solution to the optimization problem — 412

Select an output state according to application-specific constraints — 414

Apply selected output state to real-world system associated with optimization problem — 416

**FIG. 4**

EP 4 625 262 A1

**Description**

**TECHNICAL FIELD**

The present disclosure relates generally to system and method for quantum intelligence, and in particular to system and method for simulated quantum annealing to solve optimization problems.

**BACKGROUND**

Quantum intelligence (QI) represents an emerging and rapidly evolving discipline, born from advancements in artificial intelligence and quantum physics methodologies. QI is an interdisciplinary field that encompasses the utilization of quantum computing technologies, including the execution of algorithms on present-day quantum devices known as noisy intermediate-scale quantum (NISQ) devices and the application of quantum-inspired algorithms. Quantum-inspired algorithms draw inspiration from quantum physics principles and have demonstrated effectiveness in addressing complex computational challenges in physics on traditional computers.

Despite the intense efforts dedicated to creating the first fault-tolerant universal quantum computer, a significant gap remains in achieving the level of commercial viability necessary to outperform existing classical computing infrastructures. Currently, quantum-inspired methods standout as the most effective way to leverage the transformative potential of quantum computing technologies for practical use, especially for the purpose of solving complex real-world optimization problems.

**SUMMARY**

The present disclosure relates generally to system and method for quantum intelligence, and in particular to system and method for simulated quantum annealing to solve optimization problems. Quantum annealing utilizes principles of quantum mechanics, such as tunneling and superposition, to explore the energy landscape of optimization problems, avoiding local minima in principle more efficiently than conventional classical optimization methods. Quantum annealing implemented on quantum devices have been dubbed quantum annealers. Examples of the method of the present disclosure use artificial neural networks with quantum-inspired algorithms to solve real-world optimization problems by simulating (emulating) quantum annealing on classical/traditional non-quantum computers. By mimicking quantum behaviors in a quantum-inspired approach implemented on traditional non-quantum computers, the method of the present disclosure may allow more flexible algorithms for solving real-world optimization problems due to hardware limitations of current quantum annealers. By simulating quantum annealing principles, such as tunneling and superposition, the method of the present disclosure enhances solution exploration and quality for complex optimization. Examples of the method of the present disclosure leverage the representational power of artificial neural networks with quantum physics concepts, providing a practical approach to overcoming some limitations of current quantum devices.

When quantum-inspired strategies are combined with the representational power and adaptive learning of artificial neural networks, the computing system gains an enhanced ability to learn and explore the complexities of the optimization landscape. This synergy allows for a more robust exploration and exploitation of the solution space, which can lead to higher-quality solutions for complex optimization problems that are challenging or infeasible for classical algorithms alone. Thus, leveraging quantum-inspired techniques alongside artificial neural networks in the simulated quantum annealing framework can offer a compelling approach to generating quantum value in solving complex real-world optimization problems.

In accordance with one aspect of the present disclosure, there is provided a computer-implemented method for solving an optimization problem using simulated quantum annealing algorithm. The computer-implemented method is performed using a classical computing device. The method comprises: receiving a plurality of application-specific parameters of an objective function representing the optimization problem in terms of an energy function, each of the application-specific parameters having application-specific constraints; receiving a plurality of initial input values within the application-specific constraints; performing simulated quantum annealing by: generating quantum annealing simulations of the objective function by initializing a guiding wave function with a variational ansatz, wherein the guiding wave function represents a ground state wave function of a quantum optimization Hamiltonian, wherein the quantum optimization Hamiltonian comprises the objective function represented as a classical Hamiltonian and a non-commutating driving term causing quantum fluctuations; stochastically evolving the quantum annealing simulations under a time-dependent driving schedule according to an imaginary-time Schrödinger equation supplemented by the guiding wave function until a predetermined condition is met; and outputting a plurality of output states responsive to the predetermined condition being met, each output state representing a solution to the optimization problem of the application-specific parameters within the application-specific constraints; and selecting an output state from the plurality of output states according to the application-specific constraints.

In at least some examples, the guiding wave function is provided by a variational ansatz.

In at least some examples, each output state defines a value for each of the application-specific parameters within the application-specific constraints.

In at least some examples, the method further comprises: applying the output state to a system associated with the optimization problem.

In at least some examples, the objective function is defined as a classical Hamiltonian, wherein the step of performing simulated quantum annealing comprises: (i) initializing a time-dependent driving schedule in a quantum optimization Hamiltonian; (ii) generating quantum annealing simulations of the objective function by initializing the guiding wave function; (iii) equilibrating the quantum annealing simulations at an initial value of the quantum optimization Hamiltonian; (iv-1) annealing the quantum optimization Hamiltonian in accordance with the time-dependent driving schedule; (v) performing a projecting step in which quantum states having an energy level more than a threshold amount above the expectation value of the quantum optimization Hamiltonian corresponding to its ground state energy are removed; (vi) iteratively repeating steps (iv-1) and (v) until the predetermined condition is met; and (vii) outputting a plurality of output states responsive to the predetermined condition being met, each output state representing a solution to the optimization problem of the application-specific parameters within the application-specific constraints.

In at least some examples, a pre-trained time-dependent variational ansatz or a constant ansatz is used for importance sampling.

In at least some examples, a variational ansatz provides the guiding wave function, wherein the variational ansatz parameters are initialized randomly, the method further comprising: (iv-2) performing a training step in which the parameters of the variational ansatz are updated with a cost function; and wherein, step (vi) comprises iteratively repeating steps (iv-1), (iv-2), and (vi) until the predetermined condition is met.

In at least some examples, the time-dependent driving schedule is a user-defined.

In at least some examples, the time-dependent driving schedule is learned on-the-fly.

In at least some examples, the training step is performed using unsupervised learning.

In at least some examples, the training step is performed using variational optimization methods.

In at least some examples, the training step comprises performing one or several gradient descent steps on the plurality of parameters based on the cost function input values.

In at least some examples, the gradient descent optimization is performed using the stochastic gradient descent method or a variant (or alternative) thereof.

In at least some examples, the gradient is computed using automatic differentiation accelerated on dedicated hardware. The dedicated hardware may comprise one or more Graphical Processing Units (GPUs).

In at least some examples, the cost function is one of the following: the expectation value of the current value of the quantum optimization Hamiltonian over the variational ansatz with or without its variance; or the negative log-likelihood of the current input states.

In at least some examples, the trained variational ansatz is used for future sampling which comprises using the variational ansatz as an on-demand sampler for generating optimal solutions for the optimization problem.

In at least some examples, the objective function is a continuous objective function or a discrete objective function depending on a specific domain application of the objective problem.

In at least some examples, the quantum annealing simulation is performed in accordance with a projective quantum Monte Carlo (PQMC) simulation.

In at least some examples, the guiding wave function is provided by: a constant wave function; a mean field wave function; a product of Gaussian wave functions; a Jastrow wave function; or a neural network wave function.

In at least some examples, the neural network wave function is an autoregressive recurrent neural network.

In at least some examples, the autoregressive recurrent neural network comprises: a normalizing flow autoregressive recurrent neural network or a variant thereof for a continuous optimization problem; or a recurrent neural network or a variant thereof for a discrete optimization problem.

In at least some examples, equilibrating the system comprises iteratively implementing one of the following: a projective step comprising removing quantum states having an energy level more than a threshold amount above the expectation value of the quantum optimization Hamiltonian corresponding to its ground state energy until the expectation value of the quantum optimization Hamiltonian converges to a given value; a projective step comprising removing quantum states having an energy level more than a threshold amount above the expectation value of the quantum optimization Hamiltonian corresponding to its ground state energy followed by a training step using as a cost function the negative log-likelihood until the expectation value of the quantum Hamiltonian converges to a given value; or a training step using variational optimization followed by a projective step comprising removing quantum states having an energy level more than a threshold amount above the expectation value of the quantum optimization Hamiltonian corresponding to its ground state energy until the expectation value of the quantum Hamiltonian converges to a given value.

In at least some examples, the step of annealing comprises setting the driving parameter of the quantum optimization Hamiltonian to zero or a threshold that approximates zero.

In at least some examples, the projective step comprises a plurality of move and branching steps generated by iterative solving the following modified imaginary-time Schrödinger equation:

$$f(\boldsymbol{x}, \tau + \Delta\tau) = \sum_{x'} G(\boldsymbol{x}, \boldsymbol{x'}, \Delta\tau)\, f(\boldsymbol{x'}, \tau)$$

where $f(\boldsymbol{x}, \tau)$ is the product of the guiding wavefunction and the ground state wave function of the corresponding quantum optimization Hamiltonian at imaginary time $\tau$, $G(\boldsymbol{x}, \boldsymbol{x'}, \Delta\tau) = G_T(\boldsymbol{x}, \boldsymbol{x'}, \Delta\tau) b_{x'}$ is the Green's function of the modified imaginary-time Schrödinger equation, wherein $G_T$ is a transition matrix $G_T(\boldsymbol{x}, \boldsymbol{x'}, \Delta\tau)$ and $b_{x'} = \Sigma_x\, G(\boldsymbol{x}, \boldsymbol{x'}, \Delta\tau)$ a normalization term.

In at least some examples, the move step uses the transition matrix $G_T(\boldsymbol{x}, \boldsymbol{x'}, \Delta\tau)$ as a stochastic matrix defining the kinetic operator Green's function part of the quantum optimization Hamiltonian to simulate imaginary-time dynamics.

In at least some examples, the move step is constrained to meet one or more domain application constraints.

In at least some examples, the branching step uses the normalization term of the Green's function $b_{x'}$ to implement a birth-death process that effectively simulates quantum tunneling effects.

In at least some examples, the predetermined condition is one or more of the following: an application-specific constraint is less than or equal to a threshold; or the driving parameter is equal to zero or is less than a threshold that approximates zero.

In at least some examples, the threshold amount approximates the difference between a first non-degenerate excited state energy (E1) and a ground state energy (E0).

In at least some examples, the quantum optimization Hamiltonian is represented by qudits, thereby providing increased compression of the optimization problem and an efficient exploration of the solution space.

In accordance with another aspect of the present disclosure, there is provided a method of simulated quantum annealing, comprising: (i) initializing a time-dependent driving schedule in a quantum optimization Hamiltonian, wherein the quantum optimization Hamiltonian comprises the objective function represented as a classical Hamiltonian and a non-commutating driving term causing quantum fluctuations; (ii) generating quantum annealing simulations of the objective function by initializing the guiding wave function; (iii) equilibrating the quantum annealing simulations at an initial value of the quantum optimization Hamiltonian; (iv-1) annealing the quantum optimization Hamiltonian in accordance with the time-dependent driving schedule; (v) performing a projecting step in which quantum states having an energy level more than a threshold amount above the expectation value of the quantum optimization Hamiltonian corresponding to its ground state energy are removed; (vi) iteratively repeating steps (iv-1) and (v) until the predetermined condition is met; and (vii) outputting a plurality of output states responsive to the predetermined condition being met, each output state representing a solution to the optimization problem of the application-specific parameters within the application-specific constraints.

In accordance with a further aspect of the present disclosure, there is provided a computing device comprising one or more processors coupled to one or more memories. The one or more memories have tangibly stored thereon executable instructions for execution by the one or more processors. The executable instructions, in response to execution by the one or more processors, cause the computing device to perform the methods described above and herein.

In accordance with yet a further aspect of the present disclosure, there is provided one or more non-transitory machine-readable media having tangibly stored thereon executable instructions for execution by one or more processors of a computing device. The executable instructions, in response to execution by the one or more processors, cause the computing device to perform the methods described above and herein.

Other aspects and features of the present disclosure will become apparent to those of ordinary skill in the art upon review of the following description of specific implementations of the application in conjunction with the accompanying figures.

## BRIEF DESCRIPTION OF THE DRAWINGS

FIG. 1 is a schematic block diagram of a communication system suitable for use in accordance with example embodiments of the present disclosure.

FIG. 2 is a schematic block of an example of a training system architecture suitable for use in accordance with embodiments of the present disclosure.

FIG. 3 is a schematic block diagram of an example of a deep recurrent neural network suitable for use in accordance with example embodiments of the present disclosure.

FIG. 4 is a flowchart of method for performing simulated quantum annealing to solve optimization problems in accordance with an example embodiment of the present disclosure.

FIG. 5 is a flowchart of a method for implementing simulated quantum annealing with or without a pre-trained variational ansatz in accordance with an example embodiment of the present disclosure.

FIG. 6 is a flowchart of a method for implementing simulated quantum annealing with on-the-fly training of the variational ansatz via unsupervised learning in accordance with an example embodiment of the present disclosure.

FIG. 7 is a flowchart of a method for implementing simulated quantum annealing with on-the-fly training of the variational ansatz using energy and/or variance minimization techniques in accordance with an example embodiment of the present disclosure.

FIG. 8 is a flowchart of a method for implementing the projective step of the projective quantum Monte Carlo method in accordance with an example embodiment of the present disclosure.

FIG. 9 is a flowchart of a method for implementing the training step in simulated quantum annealing in accordance with an example embodiment of the present disclosure.

FIG. 10 is a block diagram of an example of a simplified computing device suitable for use in accordance with example embodiments of the present disclosure.

FIG. 11 is a flowchart of a method of simulated quantum annealing in accordance with another example embodiment of the present disclosure.

## DETAILED DESCRIPTION OF EXAMPLE EMBODIMENTS

The present disclosure is made with reference to the accompanying drawings, in which embodiments are shown. However, many different embodiments may be used, and thus the description should not be construed as limited to the embodiments set forth herein. Rather, these embodiments are provided so that this application will be thorough and complete. Wherever possible, the same reference numbers are used in the drawings and the following description to refer to the same elements, and prime notation is used to indicate similar elements, operations or steps in alternative embodiments. Separate boxes or illustrated separation of functional elements of illustrated systems and devices does not necessarily require physical separation of such functions, as communication between such elements may occur by way of messaging, function calls, shared memory space, and so on, without any such physical separation. As such, functions need not be implemented in physically or logically separated platforms, although they are illustrated separately for ease of explanation herein. Different devices may have different designs, such that although some devices implement some functions in fixed function hardware, other devices may implement such functions in a programmable processor with code obtained from a machine-readable medium. Individual functions described below may be split or subdivided into multiple functions, or multiple functions may be combined. Lastly, elements referred to in the singular may be plural and vice versa, except where indicated otherwise either explicitly or inherently by context.

For the purpose of the present disclosure, the term "real-time" means that a computing operation or process is completed within a relatively short maximum duration, typically milliseconds or microseconds, fast enough to affect the environment in which the computing operation or process occurs, such as the inputs to a computing system. The term "dynamic" refers to a result dependent on the value of a set of one or more variables, wherein the result is or may be determined in real-time in response to detection of a trigger.

Within the present disclosure, the terms "memory", "computer-readable medium" and "machine-readable medium" are used interchangeable have the same or similar meanings, depending on the context.

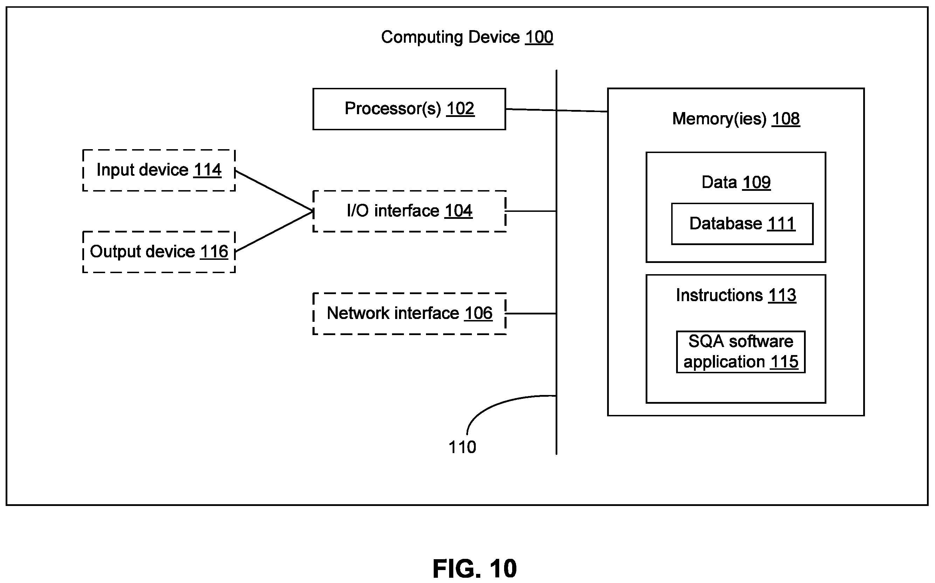

FIG. 10 illustrates a block diagram of an example simplified computing device 100 suitable for use in accordance with example embodiments of the present disclosure. Examples of the computing device 100 include, but are not limited to, a personal computer such as a desktop or laptop computer, a smartphone, a tablet, a smart TV, head worn computer (such as a virtual or mixed-reality headset, smart glasses or other head device mounted smart display), a smart speaker, a smart appliance (such as a smart thermostat, a smart fridge, or a smart oven), smart car, or other smart or IoT (Internet of Things) device, among other possibilities. Other computing systems suitable for implementing embodiments described in the present disclosure may be used, which may include components different from those discussed below. In some examples, the computing device 100 may be implemented across more than one physical hardware unit, such as in a parallel computing, distributed computing, virtual server, or cloud computing configuration. Although FIG. 10 shows a single instance of each component, there may be multiple instances of each component in the computing device 100.

The computing device 100 may include one or more processor(s) 102, such as a central processing unit (CPU) with a hardware accelerator, a graphics processing unit (GPU), a tensor processing unit (TPU), a neural processing unit (NPU), a microprocessor, an application-specific integrated circuit (ASIC), a field-programmable gate array (FPGA), a dedicated logic circuitry, a dedicated artificial intelligence processor unit, or combinations thereof.

The computing device 100 may also include one or more optional input/output (I/O) interfaces 104, which may enable interfacing with one or more optional input devices 114 and/or optional output devices 116. In the example shown, the input device(s) 114 (e.g., a keyboard, a mouse, a microphone, a touchscreen, and/or a keypad) and output device(s) 116 (e.g., a display, a speaker and/or a printer) are shown as optional and external to the computing device 100. In other examples, one or more of the input device(s) 114 and/or the output device(s) 116 may be included as a component of the computing device 100. In other examples, there may not be any input device(s) 114 and output device(s) 116, in which case the I/O interface(s) 104 may not be needed.

The computing device 100 may include one or more optional network interfaces 106 for wired or wireless communication with a communication network (e.g., an intranet, the Internet, a P2P network, a WAN and/or a LAN) or other node. The network interfaces 106 may include wired links (e.g., Ethernet cable) and/or wireless links (e.g., one or more antennas) for intra-network and/or inter-network communications.

The computing device 100 includes one or more memory(ies) 108 which may comprise volatile (transitory) and/or non-volatile (non-transitory) memory. The memory(ies) 108 may include a mass storage unit such as a solid-state drive, a hard disk drive, a magnetic disk drive and/or an optical disk drive, flash memory, random access memory (RAM), and/or a read-only memory (ROM). The memory(ies) 108 store data 109 and software instructions 113 for execution by the processor(s) 102, such as to carry out examples described in the present disclosure. to train a neural network and/or to implement a trained neural network, as disclosed herein.

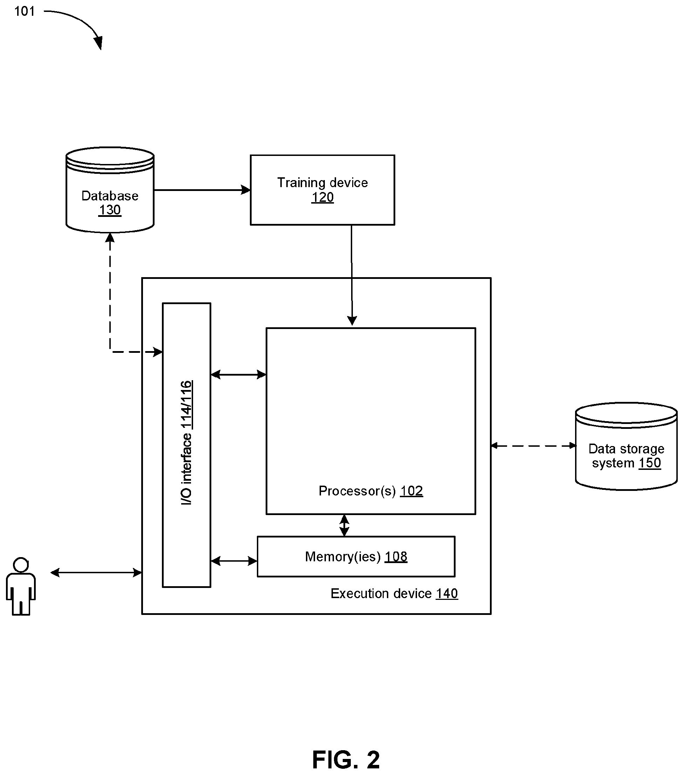

The computing device 100 may be used to implement methods for simulated quantum annealing to solve optimization problems in accordance with the present disclosure. For example, the computing device 100 may be used to provide a simulated quantum annealer 220 (FIG. 2). The memory(ies) 108 store a simulated quantum annealing software application 115 for performing one of the quantum intelligent methods described herein to solve a real-world optimization problem. As noted elsewhere herein, the computing device 100 can be implemented as a distributed system on one or more classical computing devices in one or more locations, in which the methods described herein can be implemented.

The memory(ies) 108 also store a database 111 which may include different instances of the specific real-world optimization problem being solved. The memory(ies) 108 in turn interact with the I/O interface 104, which is connected to input device(s) 114 and output device(s) 116. The computing device 100 mediates classical information processing amongst the processor(s) 102, the memory(ies) 108, the I/O interface 104, and a network interface 106, with communication therebetween enabled by the data bus 110.

In various example embodiments, the simulated quantum annealing software application 115 may include various functional software modules, such as a Projective Quantum Monte Carlo module for performing the projective step, a training module for performing the training steps, an annealing module for performing the annealing steps, and a machine learning model used as the variational ansatz. In some embodiments, the variational ansatz is a constant, a mean field, a product of Gaussians or a Jastrow wave function. In some embodiments, the variational ansatz is an artificial neural network such as a Restricted Boltzmann machine, a recurrent neural network or one of its variants, a Transformer neural network or one of its variants, or a Normalizing flow or one of its variants. The simulated quantum annealing software application 115 may also define the cost function as described below.

The database 111 can include additional data, such as a synthetic training dataset generated on-the-fly by the simulated quantum annealing software application 115. In some embodiments, the training dataset includes strings of real numbers represents the coordinate system of a continuous real-world optimization problem, for example, the fraction of investments of assets belonging to a basket of a portfolio in the context of a portfolio optimization problem. In some embodiments, the training dataset includes a string of bits that encodes the coordinate system of a discrete real-world optimization problem, for example, a set of asset allocation for the portfolio optimization problem.

In some other example embodiments, data and/or instructions may be provided by an external memory (also known as an external data storage system). The external memory may be an external drive in wired or wireless communication with the computing device 100 or may be provided by a transitory or non-transitory computer-readable medium. Examples of non-transitory computer readable media include RAM, ROM, an erasable programmable ROM (EPROM), an electrically erasable programmable ROM (EEPROM), an optical disc drive, a flash memory or other portable memory storage. The computing device 100 may invoke data and/or instructions from the external memory to perform processing and may store data and/or instructions obtained through corresponding processing in the memory 108 or the external memory.

The computing device 100 comprises a data bus 110 providing communication among components of the computing device 100, including the processor(s) 102, I/O interface(s) 104, network interface(s) 106, and/or memory(ies) 108. The communication bus 110 may be any suitable bus architecture including, for example, a memory bus, a peripheral bus or a video bus.

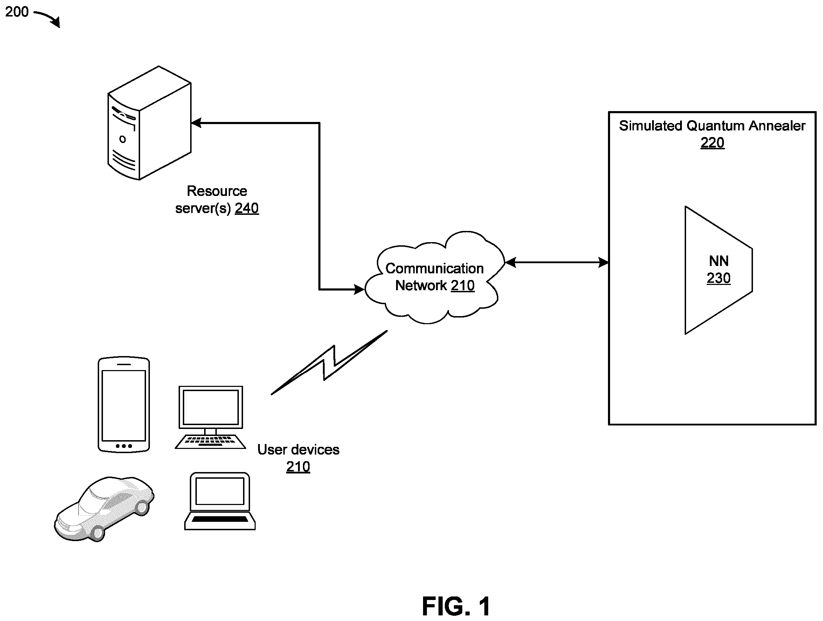

Reference is next made to FIG. 1 which shows in schematic block diagram form a communication system 200 suitable for practicing example embodiments of the present disclosure. The system 200 includes a plurality of computing devices 100, a simulated quantum annealer 220 for solving optimization problems, which may comprise a deep neural network 230, and optionally a resource server 240.

The computing devices 100 communicate with the simulated quantum annealer 220, its optional deep neural network 230 and optionally the resource server 240 via a communication network 210 which comprises, or is connected to, the Internet. The simulated quantum annealer 220 provides a cloud-based back-end analytical services for users in which some or all of the computational functions of solving optimization problems using simulated quantum annealing are performed by the simulated quantum annealer 220 with the computing devices 100 acting as a thin client that performs primarily data input and output functions. The computing devices 100 run a user front end application for which communicates and interacts with the simulated quantum annealer 220.

The communication network 210 enables exchange of data between the computing devices 100, the simulated quantum annealer 220 and the resource server 240. The communication network 210 may comprise one or a plurality of networks of one or more network types coupled via appropriate methods known in the art such as a local area network (LAN), a wireless local area network (WLAN) such as Wi-Fi™, a wireless personal area network (WPAN) such as Bluetooth™ based WPAN, a wide area network (WAN), a public-switched telephone network (PSTN), or a public-land mobile network (PLMN), also referred to as a wireless wide area network (WWAN) or a cellular network. The WLAN may include a wireless network which conforms to IEEE 802.1 1x standards or other communication protocol.

The computing devices 100 and simulated quantum annealer 220 may each comprise multiple functional components distributed among a plurality of computing devices (or systems), which may be collocated or geographical distributed/remote from each other. The functional components may be in the form of machine executable instructions embodied in a machine-readable medium. The teachings of the present disclosure are flexible and capable of being operated in various different environments without compromising any major functionality.

It should be noted the computing device 100 may be a user device or the simulated quantum annealer 220 for performing simulated quantum annealing to solve optimization problems in accordance with examples disclosed herein. Moreover, FIG. 10 is merely a schematic diagram of an example computing device 100 according to an example embodiment of the present disclosure. Relationships and interactions between the computing device 100 and other network components shown or described herein are not intended to be limiting to the present disclosure.

Reference is now made to FIG. 2, which shows an example of a training system architecture 101 in accordance with embodiments of the present disclosure. The following description shall not be construed as a limitation to any examples of this disclosure. As shown in training the system architecture 101, training data may be stored in a database 130. The database 130 may contain, for example, training datasets that have been previously collected and commonly used for training models related to the application task. The database 130 may alternatively or additionally contain data and/or datasets collected (e.g., with user consent) from an execution device 140, such as the computing device 100.

As will be discussed further below, training of a computing device 100 may be performed using a training device 120, using the training data maintained in the database 130. The training device 120 may use samples of the training data stored in the database 130 to train the computing device 100. Additionally or alternatively, the training device 120 perform the training using training data obtained from other sources, such as a distributed storage (or cloud storage platform).

The trained computing device 100 obtained through training by the training device 120 may be applied to different systems or devices. For example, the trained computing device 100 may be applied to the memory(ies) 108 and/or processor(s) 102 of an execution device 140. Although FIG. 2 illustrates an example in which the training device 120 is separate from the execution device 140, it should be understood that the present disclosure is not limited to this. In some examples, there may not be separate training device 120 and execution device 140. That is, training of the computing device 100 and application of the trained computing device 100 may be at the same device.

Generally, examples disclosed herein may relate to a variety of neural network applications. For ease of understanding, the following describes some concepts relevant to neural networks and some relevant terms that may be related to examples disclosed herein. A neural network consists of neurons. A neuron is a computational unit that uses $x_s$ as inputs. An output from the computational unit may be:

$$h_{W,b}(x) = f(W^T x + b) = f\left(\sum_{s=1}^{n} W_s x_s + b\right)$$

where $s = 1, 2, \ldots n$, n is a natural number greater than 1, $W_s$ is a weight of $x_s$, $b$ is an offset (i.e. bias) of the neuron and $f$ is an activation function of the neuron and used to introduce a nonlinear feature to the neural network, to convert an input of the neuron to an output. The output of the activation function may be used as an input to a neuron of a following convolutional layer in the neural network. The activation function may be a sigmoid function, for example. The neural network is formed by joining a plurality of the foregoing single neurons. In other words, an output from one neuron may be an input to another neuron. An input of each neuron may be associated with a local receiving area of a previous layer, to extract a feature of the local receiving area. The local receiving area may be an area consisting of several neurons.

A deep neural network (DNN) is also referred to as a multi-layer neural network and may be understood as a neural network that includes a first layer (generally referred to as an input layer), a plurality of hidden layers, and a final layer (generally referred to as an output layer). The "plurality" herein does not have a special metric. A layer is considered to be a fully connected layer when there is a full connection between two adjacent layers of the neural network. To be specific, for two adjacent layers (e.g., the i-th layer and the (i+1)-th layer) to be fully connected, each and every neuron in the i-th layer must be connected to each and every neuron in the (i+1)-th layer.

Processing at each layer of the DNN may be relatively straightforward. Briefly, the operation at each layer is indicated by the following linear relational expression: $\vec{y} = \alpha(W\vec{x} + \vec{b})$, where $\vec{x}$ is an input vector, $\vec{y}$ is an output vector, $\vec{b}$ is an offset vector, W is a weight (also referred to as a coefficient), and $\alpha(.)$ is an activation function. At each layer, the operation is performed on an input vector $\vec{x}$, to obtain an output vector $\vec{y}$.

Because there is a large quantity of layers in the DNN, there is also a large quantity of weights W and offset vectors $\vec{b}$. Definitions of these parameters in the DNN are as follows: The weight W is used as an example. In this example, in a three-layer DNN (i.e. a DNN with three hidden layers), a linear weight from a fourth neuron at a second layer to a second neuron at a third layer is denoted as $W_{24}^3$. The superscript 3 indicates a layer (i.e., the third layer (or layer-3) in this example) of the weight W, and the subscript indicates the output is at layer-3 index 2 (i.e., the second neuron of the third layer) and the input is at layer-2 index 4 (i.e., the fourth neuron of the second layer). Generally, a weight from a k-th neuron at an (L-1)-th layer to a j-th neuron at an L-th layer may be denoted as $W_{jk}^L$. It should be noted that there is no W parameter at the input layer.

In a DNN, a greater number of hidden layers may enable the DNN to better model a complex situation (e.g., a real-world situation). In theory, a DNN with more parameters is more complex, has a larger capacity (which may refer to the ability of a learned model to fit a variety of possible scenarios), and indicates that the DNN can complete a more complex learning task. Training of the DNN is a process of learning the weight matrix and the biases which corresponds to the offset vectors. A purpose of the training is to obtain a trained weight matrix and biases vectors, which consists of the learned weights W and biases $\vec{b}$ of all layers of the DNN.

In the process of training a DNN, a predicted value outputted by the DNN may be compared to a desired target value (e.g., a ground truth value). A weight vector (which is a vector containing the weights W for a given layer) of each layer of the DNN is updated based on a difference between the predicted value and the desired target value. For example, if the predicted value outputted by the DNN is excessively high, the weight vector for each layer may be adjusted to lower the predicted value. This comparison and adjustment may be carried out iteratively until a convergence condition is met (e.g., a predefined maximum number of iterations has been performed, or the predicted value outputted by the DNN is sufficiently converged with the desired target value). A loss function or a cost function can be defined, to quantitatively represent how close the predicted value is to the target value. An objective function represents a quantity to be optimized (e.g., minimized or maximized) to bring the predicted value as close to the target value as possible. A loss function more specifically represents the difference between the predicted value and the target value, and the goal of training the DNN is to minimize the loss function. A loss function or a cost function can also be defined by a variational lower bound which is always greater or equal to a value that is desired. An example of which is the Evidence Lower Bound used in variational Bayesian methods. The goal of training the DNN is then equivalent to minimizing the variational lower bound.

Backpropagation is an algorithm for training a DNN. Backpropagation is used to adjust (also referred to as update) a value of a parameter (e.g., a weight) in the DNN, so that the error (or loss) in the output becomes smaller. For example, a defined loss function is calculated, from forward propagation of an input to an output of the DNN. Backpropagation calculates a gradient of the loss function with respect to the parameters of the DNN, and a gradient algorithm (e.g., gradient descent) is used to update the parameters to reduce the loss function. Backpropagation is performed iteratively, so that the loss function is converged or minimized.

A convolutional neural network (CNN) is a DNN with a convolutional structure. The CNN includes a feature extractor consisting of a convolutional layer and a sub-sampling layer. The feature extractor may be considered as a filter. A convolution process may be considered as performing convolution on a two-dimensional (2D) input image or a convolutional feature map using a trainable filter.

The convolutional layer is a layer of neurons at which convolution processing is performed on an input in the CNN. In a convolutional layer, one neuron may be connected only to a subset of neurons (i.e., not all neurons) in neighboring layers. That is, a convolutional layer generally is not a fully connected layer. One convolutional layer usually includes several feature maps, and each feature map may be formed by some neurons arranged in a rectangle. Neurons at a same feature map share weights. The shared weights may be collectively referred to as a convolutional kernel. Typically, a convolutional kernel is a 2D matrix of weights. It should be understood that the convolutional kernel may be unrelated to a manner and position of image information extraction. A hidden principle behind convolutional layers is that statistical information of a part of an image is the same as that of another part of the image. This means that image information learned from one part of the image may also be applicable for another part of the image. A plurality of convolutional kernels may be used at the same convolutional layer to extract different image information. Generally, a larger quantity of convolutional kernels indicates that richer image information is reflected by a convolution operation.

A convolutional kernel may be initialized as a 2D matrix of random values. In a training process of the CNN, the weights of the convolutional kernel are learned. An advantage of using the convolutional kernel to share weights among neurons in the same feature map is that the connections between convolutional layers of the CNN is reduced (compared to the fully connected layer) and the risk of overfitting is lowered.

A recurrent neural network (RNN) is a type of neural network (usually a DNN) that is often used to process sequence data, where there is expected to be some relationship in the sequential order of the data (e.g., in a set of temporal data containing data over a sequence of time steps, or in set of text data where information is encoded in the order of the words in the text). For example, to predict a word in a sentence, a previous word is usually needed, because the likelihood of a predicted word is dependent on the previous word(s) in a sentence. In RNNs, computation of a current predicted output of a sequence is also related to a previous output. Conceptually, a RNN may be understood as "memorizing" previous information and applying the previous information to computation of the current predicted output. In terms of the neural network layers, the nodes between the hidden layers are connected such that an input to a given hidden layer includes an output from a preceding layer, and additionally includes an output generated by the hidden layer from a previous input. This may be referred to as parameter sharing, because parameters (e.g., layer weights) are shared across multiple inputs to the layer. Thus, the same input to the hidden layer, provided at different sequential position in the sequence data, can result in different output being generated by the hidden layer depending on previous inputs in the sequence. A RNN may be designed to process sequence data of any desired length. A RNN can be used also without parameter sharing.

Training of the RNN may be similar to the training of a conventional CNN or DNN. The backpropagation algorithm may also be used in the RNN, in a gradient descent algorithm. The output of each gradient step is calculated from the weights of a current step, and additionally from the weights of several previous steps. The learning algorithm for training the RNN may be referred to as back propagation through time (BPTT).

Gated convolution is a technique in which two different sets of convolution weights are applied to a single gated convolutional layer to generate two separate convolutional outputs. A set of gate weights, denoted as $W_g$, is used to compute a set of gate values; and a set of feature weights, denoted as $W_f$ is used to compute a set of features for the layer. The gate values are used as input to a gating function, to enable dynamic control of what information from the computed set of features is passed to the next layer.

A gated convolutional layer may be described using the following:

$$G = \mathrm{conv}(W_g, I)$$

$$F = \mathrm{conv}(W_f, I)$$

$$O = \sigma(G) \odot \psi(F)$$

where I is the set of inputs to the gated convolutional layer, G is the set of gate values, F is the set of feature values, O is the gated output of the gated convolutional layer, $\sigma$ is the Sigmoid function (used as the gating function), and $\psi$ is the activation function. It may be noted that the output values of the Sigmoid function are within [0, 1]. Thus, gated convolution enables the neural network to learn a dynamic feature selection mechanism.

A gated recurrent unit (GRU) is a mechanism used for gating in RNNs. As previously discussed, an RNN involves connections between hidden layers of the neural network. The GRU introduces mechanisms to control updating of a hidden state should be updated and to control resetting of a hidden state. These mechanisms are referred to as the update gate and the reset gate, each of which are learned weight vectors. Generally speaking, the reset gate controls how much of a previous state contributes to a current state of a hidden layer, and the update gate controls how much of the current state is copied from the previous state. GRU is a technique that may be used to enable a RNN to continue to learn from older hidden states.

A generative adversarial network (GAN) is a deep learning model, and provides another technique for training a DNN. A GAN includes at least two modules: one module is a generative model (also referred to as a generator), and the other module is a discriminative model (also referred to as a discriminator). These two models compete with each other and learn from each other, so that a better output is generated. The generator and the discriminator may both be neural networks, and may be specifically DNNs, or CNNs.

A basic principle of the GAN is now described, using the example of photo generation. The generator is a network that is learning to perform the task of producing a synthetic photo. The generator receives a random noise z as input, and generates an output, denoted by G(z). The discriminator is a network that is learning to discriminate whether a photo is a real-world photo. The discriminator receives the input x, where x represents a possible photo. An output D(x) generated by the discriminator represents the probability that x is a real-world photo. If D(x) is 1, it indicates that x is absolutely a real-world photo. If D(x) is 0, it indicates that x absolutely is not a real-world photo. In training the GAN, an objective of the generator is to generate a photo as real as possible (to avoid detection by discriminator), and an objective of the discriminator is to try to discriminate between a real-world photo and the photo generated by the generator. Thus, training constitutes a dynamic adversarial process between the generator and the discriminator. The aim of the training is for the generator to learn to generate a photo that the discriminator cannot discriminate from a real-world photo (ideally, D(G(z)) = 0.5). The trained generator is then used for model application, which is generation of a synthetic photo in this example.

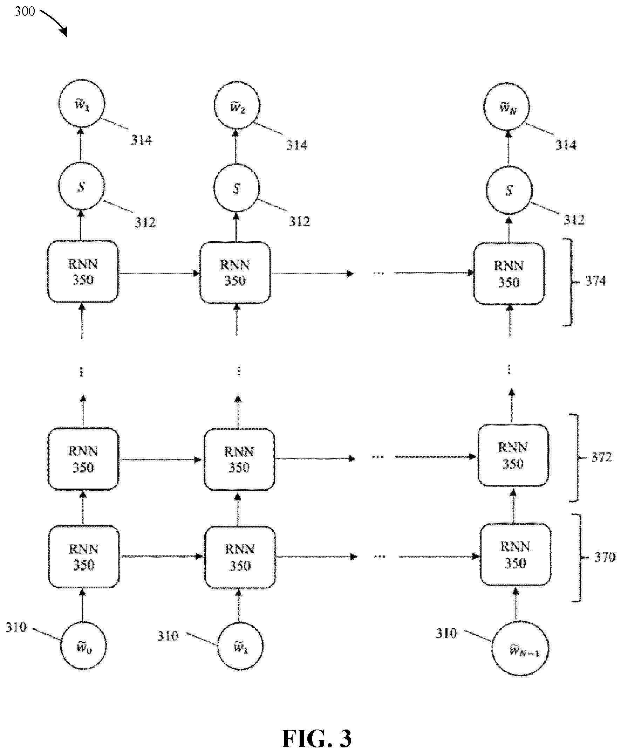

Referring now to FIG. 3, a deep recurrent neural network (RNN) 300 that may be used to implement example embodiments of the present disclosure will now be described. The RNN 300 may be an autoregressive recurrent neural network in at least some embodiments. The RNN 300 comprises a plurality of RNN cells 350. The RNN cells 350 may have the same or different parameters. Each RNN cell 350 may be separate trainable with respect to the parameters. The use of RNN cells 350 with independent, trainable parameters is preferred for solving complex optimization problems defined by an objective function. Each RNN cell 350 may be a conventional RNN cell, a gated recurrent unit (GRU) cell or a long short-term memory (LSTM) cell.

The deep RNN 300 comprises a plurality of layers, each layer comprising a number RNN cells 350. The first layer, second layer and final layer are noted by references 370, 372 and 374, respectively. Recurrent neural networks such as the RNN 350 are a type of neural network in which outputs from previous time steps are taken as inputs for the current time step. The RNN 300 has cyclic connections and is unrolled by forward passes when the state of the neutral network is copied for each input time step. Although the training of the RNN 300 will not be described in detail herein, the RNN 300 is unrolled by backward passes for updating network weights during training.

The RNN 300 is unrolled over a plurality of steps (also known as iterations). Each step represents a resource or asset (such as a financial asset) $i$. At each step, the RNN structure is extended over multiple deep layers depicted by references 370, 372 and 374. The RNN cells 350 in the first layer 370 receives two inputs. The first input is a hidden state from the previous step/iteration which is depicted by a straight solid arrow. The zero-input state is not shown in FIG. 3. The second input is $\tilde{w}_i$, a one-hot encoding of a real vector $w_i$. It will be understood to persons skilled in the art of machine learning that one-hot encoding uses a group of bits among which the only valid combinations of values are those with a single high (1) bit and all the others low (0). One-hot encoding has several advantages including favorable costs (determining the state has a low and constant cost of accessing one flip-flop, and changing the state has the constant cost of accessing two flip-flops), it is relative to detect invalid states, and it typically allows a state machine to run at a faster clock rate than any other encoding of that state machine, among other advantages. The second input is $\tilde{w}_i$, a one-hot encoding of a real vector $w_i$. $w$ is a real vector indicating a fractional allocated to each asset. The input $\tilde{w}_0$ serves as a zero-input state to the RNN 300.

The real vector $w_i$ may represent a number of different things, such as a fractional allocation to a resource (or asset). Examples of the allocation of resources include, but are not limited to, the allocation of network bandwidth to user equipment in communication network, the allocation of processing resources such those of a data processing farm (e.g., cloud computing server farm), the allocation of water or electricity to homes, and the allocation of a fixed sum of money to financial assets (such as stocks). For the purpose of illustration only, the allocation of a fixed sum of money to financial assets is used as an example application wherein.

The RNN cells 350 in the other layers by 372 and 374 also receive two inputs. The first input from the hidden state received from the previous layer and the second input received from the hidden state of the previous step/iteration which is located at the same layer depth as the current RNN cell.

The RNN 300, in particular when implemented as an autoregressive recurrent neural network, may be used to model the joint probability distribution of portfolios. For example, for a case of capital allocation described in Equation (II) below, using the chain rule of probabilities, the joint distribution $p(\boldsymbol{w}) = p(w_1, w_2, \cdots, w_M)$ can be modelled as:

$$p_{\boldsymbol{\theta}}(\boldsymbol{w}) = p_{\boldsymbol{\theta}}(w_1)p_{\boldsymbol{\theta}}(w_2|w_1)\cdots p_{\boldsymbol{\theta}}(w_M|w_{M-1},\cdots,w_2,w_1) \qquad \text{Equation (I)}$$

wherein $\theta$ represents all the weights and biases of the RNN 300, in particular when implemented as an autoregressive recurrent neural network, which are initialized (typically randomly). A single or deep RNN (or one of its variants) or a Transformer neural network (or one of its variants) is used to sample a discretized version of the allocation vector $\boldsymbol{w}$. Other autoregressive recurrent neural networks such as Normalizing Flows can also be used to sample the continuous weight allocations provided that their output weights are adequately bounded. However, they are not preferred to account for the fact that investments in the financial world are generally made in values of discretized packets.

The RNN cells at the last layer 374 are connected to a SoftMax layer 312 from which a conditional probability $p_\theta(w_{i+1}|w_{<i})$ of generating the next allocation vector is obtained. Then, $\bar{w}_{i+1}$ sampled from that probability, as shown in step 314. By unrolling the RNN 300, which corresponds to performing an autoregressive sampling, the joint probability distribution $p_\theta$ (w) can be obtained together with the samples w according to Equation (I).

A capital allocation for portfolio optimization problem may comprise, given a basket of M assets, the allocation of a nominal capital of $1 amongst those assets so that the expected returns are maximized while minimizing the portfolio volatility. Inequality constraints on each individual asset can also be imposed in terms of minimum and maximum investment. A target volatility $\sigma^2_{tar}$ on the portfolio can also be imposed. The resulting objective function for capital allocation can be defined as:

$$H = -\boldsymbol{\mu}^\intercal \boldsymbol{w} + \frac{1}{2}\boldsymbol{w}^\intercal \Sigma \boldsymbol{w} + \lambda \left(\sqrt{\boldsymbol{w}^\intercal \Sigma \boldsymbol{w}} - \sigma^2_{tar}\right)^2$$

$$s.t. \sum_{i=1}^{M} w_i = 1$$

$$w_i^{min} \le w_i \le w_i^{max}, \forall i \in 1,...,M$$

$$\text{and } w_i \in [0,1]$$

Equation (II)

wherein w is a real vector indicating the fraction of the budget that should be allocated to each asset. $\lambda$ is a Lagrange multiplier that needs to be appropriately tuned to impose the volatility constraint.

The sampling of $\boldsymbol{w}$ is made by progressively enrolling the RNN 300, in particular when implemented as an autoregressive recurrent neural network, over the total number of assets. For a given asset $i$, the corresponding allocation value $w_i$ is sampled by a SoftMax layer in the autoregressive recurrent neural network. In practice, the sampling of $w_i$ it performed upon a one-hot encoding thereof $\bar{w}_i$, which is a vector corresponding to the space of allowed values of the corresponding asset. For example, if asset $i$ has as a constraint for its allocation $0.02 \le w_i \le 0.05$, and if investment for this asset it allowed only in units of one percent (i.e., $\Delta w_i = 0.01$), then the scope of investments corresponding to this asset is represented by the categorical vector [0.02, 0.03, 0.04, 0.05 ]. Hence, a sample from the SoftMax layer the value $\bar{w}_i = [0, 0,1, 0]$ corresponds to an allocation value of $w_i = 0.04$, while another one sample from the SoftMax with the value $\bar{w}_i = [1, 0, 0, 0]$ corresponds to an allocation value of $w_i = 0.02$. The latter value can be used in computing the objective function in Equation (II).

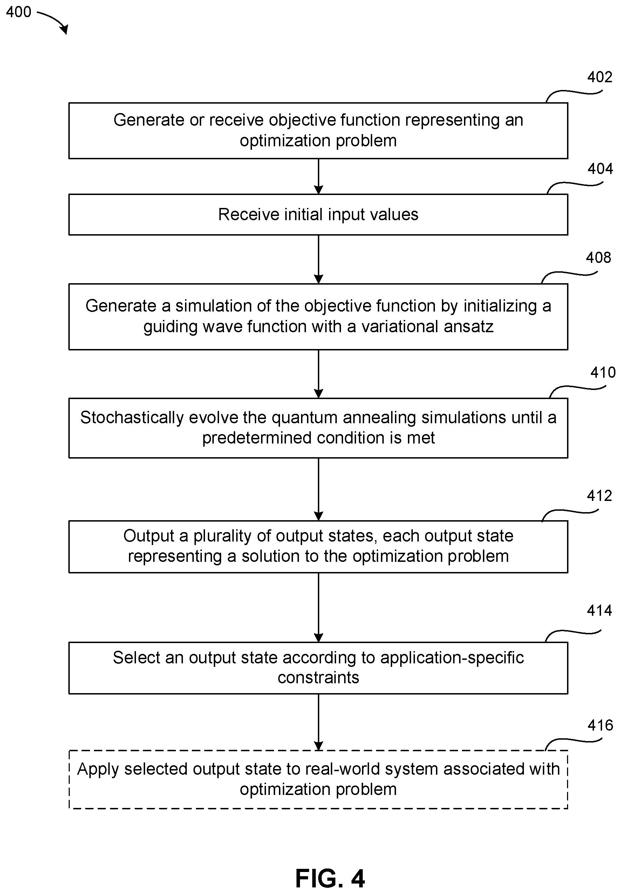

FIG. 4 is a flowchart of method 400 for performing simulated quantum annealing (SQA) to solve optimization problems in accordance with an example embodiment of the present disclosure. The complex optimization problems which can be solved by the SQA method 400 of the present disclosure are defined by an objective function. The objective function is an energy function such as a classical Hamiltonian. The SQA method 400 can be used to solve both continuous and discrete real-world optimization problems, as described more fully below. The method 400 is performed at least in part by one or more processors 102 of a computing device 100 such as the simulated quantum annealer 220, which may have been trained by, or comprise, a neutral network such as the neural network 230.

SQA is a Markov Chain Monte-Carlo algorithm that simulates an annealing process using quantum fluctuations in the same fashion that Simulated Annealing (SA) simulates an annealing process using classical (mostly thermal) fluctuations. Conceptually, SA simulates the physical annealing process in which a metal is heated to a high temperature above its recrystallization temperature, subsequently cooled and recrystallized, and ends up in one of its lowest energy states. Exploration of different energy states is performed using thermal fluctuations. In a metal, atoms in the crystal lattice migrate so that number of dislocations decreases. In SQA, a similar methodology is used but instead of thermal fluctuations, quantum fluctuations are used. There, an objective function is represented as an Hamiltonian whose ground state contains the solution to the optimization problem. Quantum fluctuations are introduced by another Hamiltonian which does not commute with the objective function Hamiltonian. Quantum fluctuations are used to explore different states of the optimization problem. The simulations of the quantum many-body system made up of the sum of the Hamiltonian representing the objective function and the one representing quantum fluctuations usually starts at high values of the intensity of the quantum fluctuations. Then the quantum fluctuations are gradually reduced to zero or a very low value, so that the remaining Hamiltonian is predominantly the one of the objective function. The lowest energy state of the objective function Hamiltonian will then be the optimum solution to the optimization problem. In the present disclosure, the SQA is implemented using a quantum-inspired method, namely the projective Quantum Monte Carlo (PQMC) algorithm. PQMC is implemented in a time-dependent manner to simulate the quantum annealing dynamics.

For a continuous real-world optimization problem (for example, of a continuous system), the objective function of the real-world optimization problem with or without some or all of its constraints is translated to the classical energy $V$ of a quantum many-body system. The classical energy of the quantum many-body system is represented by a classical energy function $V(\boldsymbol{x})$ which represents the connections between variables $\boldsymbol{x}$ of the original real-world problem, wherein $\boldsymbol{x}$ represents a configuration of the positions of $N$ particles in real space. A continuous real-world optimization problem is formulated as classical energy function $V(\boldsymbol{x})$. It will be appreciated that solving the original continuous real-world optimization problem is equivalent to finding a configuration $\boldsymbol{x}$ of the quantum many-body system for which the classical energy $V(\boldsymbol{x})$ has its lowest value. In other words, the ground state solution will correspond to the solution of the original optimization problem.

For a discrete real-world optimization problem (for example, of a discrete system, the objective function can be defined as a k-local spin glass Hamiltonian in accordance with a suitable technique known in the art of quantum intelligence. An example of a suitable technique for defining an objective function as a k-local spin glass Hamiltonian is described by Andrew Lucas in Ising formulations of many NP problems, Front. Phys., Sec. Interdisciplinary Physics, Volume 2 - 2014, https://doi.org/10.3389/fphy.2014.00005, 15 pages, 12 February 2014, the content of which is incorporated herein by reference. Similar to a continuous real-world optimization problem, the ground state solution will correspond to the solution of the original optimization problem.

At step 402, a real-world optimization problem is received by the computing device 100. An objective function corresponding to the optimization problem is subsequently generated in the form of an energy function. The objective function may be defined as a classical Hamiltonian. The objective function may be generated from application-specific data and a user-defined objective (or task). The objective function may be a continuous objective function or a discrete objective function depending on a specific domain application of the objective problem. A plurality of application-specific parameters for the objective function are also received, each of the application-specific parameters having application-specific constraints. The application-specific constraints may be user defined. The parameters application-specific parameters may be projective quantum Monte Carlo (PQMC) parameters in at least some examples. Alternatively, a predetermined objective function for the real-world optimization problem may be received by the computing device 100. In an illustrative example, the real-world optimization problem is a continuous optimization problem of financial portfolio optimization. The financial portfolio optimization problem is: Given a budget to allocate in a basket of N assets, find the fraction of a budget $w_i$ to assign to each asset $i$ to maximize returns while minimizing risk exposure. The corresponding continuous objective function can be formulated as a Hamiltonian $H$ in accordance with Equation (1):

$$H = -\boldsymbol{\mu}^{\mathsf{T}}\boldsymbol{w} + \frac{1}{2}\boldsymbol{w}^{\mathsf{T}}\Sigma\boldsymbol{w}$$

$$\text{wherein } s.t. \sum_{i=1}^{N} w_i = 1$$

$$\text{Equation (1)}$$

wherein $\mu$ is a vector of returns based on real-world data from historical closing prices of the $N$ assets for a given trading period, $w_i$ is the allocation of an amount of money (e.g., budget) to assign to each asset $i$ in a portfolio of $N$ assets, $N$ is the number of assets in the portfolio, and $\boldsymbol{w}$ is a real vector of length $M$ indicating the fraction of the budget that should be allocated to the assets in the portfolio. Thus, the first term in Equation (1) ("$-\boldsymbol{\mu}^{\mathsf{T}}\boldsymbol{w}$") represents the (negative) expected returns, and $\Sigma$ is the corresponding covariance matrix based on a given lookback window that can be used to model the portfolio risk exposure. With respect to financial portfolio allocation, non-limiting examples of constraints are the type of asset (e.g., stocks, bonds, money market instruments, mutual funds, exchange traded funds (ETFs), etc.), the asset category or theme (e.g., technology stocks, pharmaceutical stocks, financial stocks, real estate stocks, consumer stocks, industrial stocks, etc.; corporate bonds, municipal bonds, government bonds, etc.), the number of assets of one or more asset types, the absolute or relative amount allocated to any particular type of asset, individual asset, or asset category or theme.

A corresponding classical energy $V(\boldsymbol{w})$ for the continuous objective function in Equation (1) is given by:

$$V(\boldsymbol{w}) = -\boldsymbol{\mu}^{\mathsf{T}}\boldsymbol{w} + \tfrac{1}{2}\boldsymbol{w}^{\mathsf{T}}\Sigma\boldsymbol{w} + \lambda\left(\textstyle\sum_{i=1}^{N} w_i - 1\right)^2 \qquad \text{Equation (1)}$$

wherein $\lambda$ is a Lagrange multiplier appropriately tuned to impose a normalization constraint on the allocation of the assets in the portfolio. In physics terms, the change in the allocation of the assets in the portfolio (i.e., fraction of the budget that should be allocated to the assets in the portfolio) can be analogized to interacting particles in a potential field. Thus, solving the continuous objective function of the optimization problem in Equation (1) is equivalent to finding the lowest energy configuration of the classical energy function $V(\boldsymbol{w})$ in Equation (2) Equation (1).

In other examples, additional constraints can be added to the objective function and thus to the corresponding classical energy function. The additional constraints may be non-linear and/or non-convex such as leverage constraints.

At step 404, a plurality of initial input values within the application-specific constraints are received by the computing device 100.

Simulated quantum annealing is performed to solve the optimization problem encoded in the classical energy $V(\boldsymbol{x})$ using the initial input values received in step 402 as a starting point. In at least some examples, the quantum annealing simulation is performed in accordance with a projective quantum Monte Carlo (PQMC) simulation.

At step 408, the simulated quantum annealing. The process commences at step 408 at which quantum annealing simulations of the objective function are generated by initializing a guiding wave function with a variational ansatz. The guiding wave function represents the ground state wave function of the quantum optimization Hamiltonian. The guiding wave function is a mathematical representation of the quantum many-body system as a function of one or more of the following momentum, time, position, spin and qudit. In at least some examples, the guiding wave function may be encoded using one-hot encoding. In at least some examples, the quantum optimization Hamiltonian is represented by qudits, thereby providing increased compression of the optimization problem and an efficient exploration of the solution space.

As will be appreciated by persons skilled in the art of quantum computing, the term "ansatz" refers to an initial wave function or initial state that is used as a starting point for approximations or optimizations. The "ansatz" is a parameterized quantum state that serves as an initial solution to the optimization problem, i.e. finding the ground state of a quantum system. A variational ansatz differs from a conventional ansatz in that instead of directly encoding the quantum state, it is approximated using a parametrized trial state. The variational ansatz comprises a plurality of initial values for the plurality of application-specific parameters within the application-specific constraints.

The guiding wave function may be provided by a constant wave function, a mean field wave function, a product of Gaussian wave functions, a Jastrow wave function, or a neural network wave function. In some examples, the neural network wave function may be an autoregressive recurrent neural network. In some examples, the autoregressive recurrent neural network comprises a normalizing flow autoregressive recurrent neural network or a variant thereof for a continuous optimization problem. In some examples, the autoregressive recurrent neural network comprises a recurrent neural network or a variant thereof for a discrete optimization problem.

The guiding wave function is initialized with the plurality of initial input parameters (also referred to as input states) and PQMC parameters together with the application-specific constraints. An example of input state initialization with constraints in the example embodiment of financial portfolio optimization is budget diversification constraints. This is equivalent to assigning an investment window with a minimum and maximum value to each asset in the portfolio. Another example of input state initialization with constraints in a discrete optimization setting will be depicted for the asset allocation problem. In one example, it comprises finding a subset of M assets in a basket of N assets that maximizes the Sharpe ratio. The initial configurations will be that of spin configurations with M spins pointing up (i.e. spin-up) and the remainder pointing down (spin-down).

To make the optimization problem a quantum optimization problem, a non-commuting term mimicking fictitious quantum fluctuations is added to the classical energy, thereby providing the quantum optimization Hamiltonian. A generic continuous optimization problem is defined by Equation (3):

$$\widehat{H} = -\frac{\hbar}{2m}\sum_{i=1}^{N}\nabla_{x_i}^2 + \widehat{V}(\boldsymbol{x})$$

$$\text{Equation (3)}$$

wherein $\hbar$ is the reduced Planck constant and $m$ is mass of the particle, which is assumed to be the same for all particles in the quantum system.

Finding the ground state properties of the quantum Hamiltonian in Equation (1) with PQMC is achieved by projecting out the ground state via an imaginary-time evolution of the Schrödinger equation. For continuous-space models, this technique is more commonly known as Diffusion Monte Carlo, as described by M. H. Kalos and P. A. Whitlock in Monte Carlo Methods, 2nd Edition, John Wiley & Sons, New York, 2008, the content of which is incorporated herein by reference.

The SQA can also be formulated for discrete optimization problems with a time-dependent Hamiltonian as defined by Equation (4):

$$\widehat{H}(\tau) = -\sum_{i,j,k,l,\ldots} J_{i,j,k,l,\ldots} \sigma_i^z \sigma_j^z \sigma_k^z \sigma_l^z \ldots - \Gamma(\tau) \sum_i \sigma_i^x.$$

$$\text{Equation (4)}$$

wherein $\sigma_i^z$ and $\sigma_i^x$ are Pauli matrices acting at site $i$, $J_{i,j,k,l,\ldots}$ is the interaction strength between the spins with corresponding indices. Each spin experiences a transverse field of strength $\Gamma(\tau)$, which introduces time-dependent quantum fluctuations.

The first term in Equation (4) encodes the real-world optimization problem whereas the second term is a time-dependent transverse field Hamiltonian. Similar to the continuous optimization problem, PQMC is used to find ground state properties of a quantum system of the defined by Equation (4). For spin systems, PQMC is more commonly known as Green's Function Monte Carlo, as described by Sandro Sorella and Federico Becca in SISSA Lecture notes on Numerical Methods for Strongly Correlated Electrons, Scuola Internazionale Superiore Di Studi Avanzati - International School for Advanced Studies, Academic year 2014-2015, 5th draft, June 21, 2016, the content of which is incorporated herein by reference.

At step 410, the quantum annealing simulations are stochastically evolved under a time-dependent driving schedule according to an imaginary-time Schrödinger equation supplemented by a guiding wave function until a predetermined condition is met. The simulated quantum annealing processes comprises gradually reducing the strength of the quantum fluctuations defined by the quantum many-body system, for example, by varying the mass parameter $m$. At an initial annealing time $\tau_i$, the mass parameter has a small value $m(\tau = \tau_i) = m_0$. This causes the ground state wave function to be delocalized on a large portion of the configuration space. The mass parameter is then gradually increased (ideally adiabatically) as the annealing time increases to a very large value at the final annealing time $\tau_f$ such that, $m(\tau = \tau_f) \gg m_0$, and the kinetic part of the time-dependent Hamiltonian is almost zero. If the annealing speed is slow enough, the system will remain in the instantaneous ground state during the annealing process and at final annealing time $\tau_f$, the wave function will be localized in region of space where the classical energy $V(x)$ is minimal, hence solving the original optimization problem. Note that the classical energy term can also be increased from a zero value as the quantum fluctuations are decreased.

As with continuous optimization problems, simulated annealing for discrete optimization problems is performed by annealing the driving term in Equation (4), starting from a high value of the field to zero or a very small value, with the speed of annealing procedure dictating the quality of the end results of the optimization. For both continuous and discrete optimization problems, the simulated annealing can alternatively performed be ramping down the driving term in the quantum Hamiltonian while ramping up the classical term encoding the original optimization problem.

At step 412, responsive to the predetermined condition being met, a plurality of output states is output, each output state representing a solution to the optimization problem of the application-specific parameters within the application-specific constraints. The output state(s) $\{x_{opt}\}$ are the states having the lowest classical energies after annealing for continuous optimization problems. The output state(s) define a set of spin configurations $\{|\sigma_{opt}\rangle\}$ having the lowest classical energies after annealing in the discrete optimization problems. The output state(s) constitute the optimal solutions to the optimization problem.

At step 414, one or more of the output states are selected according to the application-specific constraints.

At step 416, a selected output state is optionally applied to a real-world system associated with the real-world optimization problem, such as a physical system associated with the real-world optimization problem. The real-world system depends on the application domain of the optimization problem, which may relate to the allocation of resources such as financial assets, network bandwidth, communication frequencies, computer processing resources, utilities such as water or electricity, energy in a grid, transportation assets (freight trucks, boats, planes and the like) and airplanes, amongst other possibilities.

An advantage of using quantum-inspired method 400 (which uses SQA with PQMC) over current quantum devices is shown in its ability to natively tackle real-world discrete optimization problems with interaction range such as that in Equation (4). For example, on current NISQ devices such a problem would necessarily need to be formulated in a Quadratic Unconstrained Binary Optimization (QUBO) problem, therefore leading to an overhead in the total number of qubits required to solve the problem. Another advantage of using quantum-inspired method 400 has over most NISQ devices is its ability to handle natively and effectively higher order bits of quantum information known as qudits, whereas dedicated quantum computers are typically limited to qubits. It will be appreciated by persons skilled in the art of quantum computing that a qudit is a multi-level computational unit alternative to the conventional 2-level qubit, with a qudit being a quantum version of d-ary digits for d > 2.

A simple example of implementing higher-order quantum computing in the example embodiments presented here is that of a qutrit system. To illustrate its ability to encode more information in a single quantum state, we use the real-world example of asset allocation. Using qubits, investment decision is binary: select an asset or do not select an asset. The decision (or state) of selecting an asset may be encoded as spin-up or whereas the decision (or state) of not selecting an asset may be encoded as spin-down. Using a 3-level qudit known as qutrit, the investment decision is trinary (three-fold) such as, for example, do not select an asset, select an asset for long-positions and select an asset for short-positions. This is represented in the basis state of a qutrit as:

$$\text{asset in long-position} \equiv \begin{pmatrix} 1 \\ 0 \\ 0 \end{pmatrix},$$

$$\text{asset in short-position} \equiv \begin{pmatrix} 0 \\ 0 \\ 1 \end{pmatrix},$$

or

$$\text{asset not selected} \equiv \begin{pmatrix} 0 \\ 1 \\ 0 \end{pmatrix}.$$

Hence, a configuration for N assets in the portfolio will be a tensor product of N qutrit states. The discrete asset allocation classical Hamiltonian will be represented with tensor product of operators $\hat{S}_z$ instead of Pauli-z matrices as follows:

$$\hat{S}_z = \begin{pmatrix} 1 & 0 & 0 \\ 0 & 0 & 0 \\ 0 & 0 & -1 \end{pmatrix}$$

Quantum effects can be engineered by using a time-dependent driving term with an appropriate combination of raising $S^+$ and lowering $S^-$ operators, wherein:

$$S^+ = \begin{pmatrix} 0 & 1 & 0 \\ 0 & 0 & 1 \\ 1 & 0 & 0 \end{pmatrix},$$

and

$$S^- = \begin{pmatrix} 0 & 0 & 1 \\ 1 & 0 & 0 \\ 0 & 1 & 0 \end{pmatrix}.$$

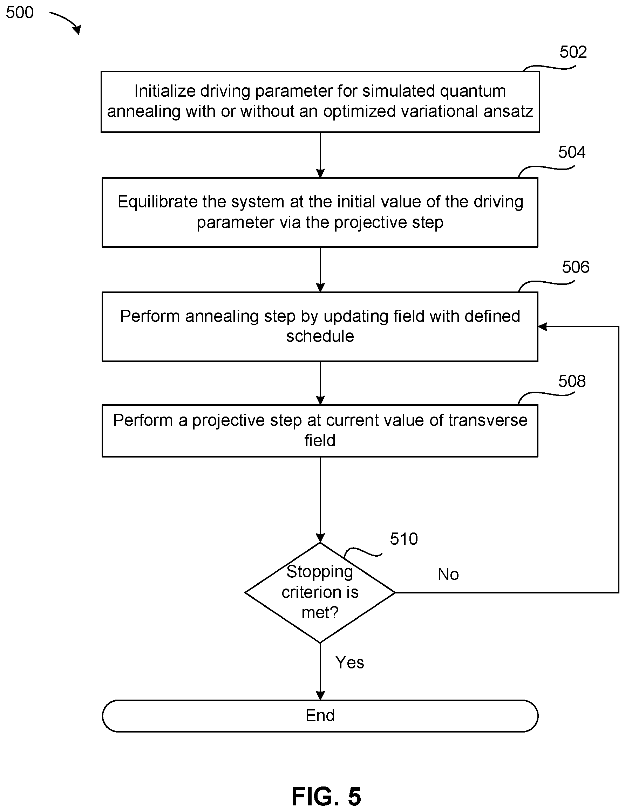

Referring now to FIG. 5, a method 500 for implementing the simulated quantum annealing step 410 of the method 400 in accordance with an example embodiment of the present disclosure. The simulated quantum annealing step may be performed with or without a pre-trained variational ansatz. The method 500 depicts in more detail the typical way SQA with PQMC is performed.

At step 502, all the parameters of the variational ansatz are initialized. As previously mentioned, this is where the driving term of the quantum optimization Hamiltonian is initialized. It is for example the mass for a continuous space optimization or a transverse field amplitude for discrete optimization.

Typically, the method 500 is implemented both in its continuous and discrete forms with importance sampling.

There, a variational ansatz which represents the ground state wave function is chosen to guide the simulations to regions of configuration space with high support on the ground state probability distribution. The closer the variational ansatz is to the actual ground state wave function, the faster the simulations converge and the more accurate the results are.

Usually, the chosen ansatz is first of all optimized or trained in a separate set of simulations using the Variational Monte Carlo (VMC) method (See, *Quantum Monte Carlo Approaches for Correlated Systems,* above), where estimates of the variational parameter(s) are obtained at different points of the phase diagram. At the end of the VMC simulations, a functional form of the variational parameter(s) is obtained with respect to the change of the driving term that occurs for a chosen annealing schedule. The functional form of the variational parameter is then input into the SQA with PQMC simulations. This is described in Lorenzo Stella and Giuseppe E. Santoro, Quantum annealing of an Ising spin-glass by Green's function Monte Carlo, Phys. Rev. E 75, 036703, https://doi.org/10.1103/PhysRevE.75.036703, 6 pages, 13 March 2007, the content of which is incorporated herein by reference.

It is noted that a two-stage approach i.e., VMC followed by SQA with PQMC is only amenable for variational ansatzes with very few parameters as it quickly becomes intractable to implement when the number of trainable parameters is huge. A case that is encountered when using artificial neural networks to guide PQMC simulations. In the subsequent embodiments, ways to deal with this issue will be presented.

The method 500 can also be implemented without using a variational ansatz or by using a constant ansatz. This is equivalent to implementing PQMC without importance sampling.

In step 504, the system in equilibrated at the initial value of the quantum optimization Hamiltonian. This is performed by implementing the PQMC method on the quantum optimization Hamiltonian until convergence is met. In an adiabatic quantum annealing picture, it corresponds to preparing the system in the region of the phase diagram where the ground state is easy to prepare.

The quantum annealing process starts in step 506. The driving term of the quantum Hamiltonian is reduced according to a user-defined schedule. In some examples, annealing comprises setting the driving parameter of the quantum optimization Hamiltonian to zero or a threshold that approximates zero. At step 506, a projecting step is performed in which quantum states having an energy level more than a threshold amount above the expectation value of the quantum optimization Hamiltonian corresponding to its ground state energy are removed. The threshold amount approximates the difference between a first non-degenerate excited state energy (E1) and a ground state energy (E0). It will be understood by persons skilled in the art that that degenerate states are different states that share the same energy level. The projecting step 508 comprises perform the PQMC simulations. Then, PQMC simulations are carried out in step 508 on the new quantum optimization Hamiltonian, ideally to equilibration, but the number of Monte Carlo steps in between annealing steps is a hyperparameter that is fixed by the user.

The steps 506 and 508 are iteratively repeated until a stopping criterion (also referred to as a predetermined condition) is met (decision block 510). The stopping criteria/predetermined condition can be, for example, when the driving term in the quantum optimization Hamiltonian reaches zero or a very small value. In some examples, the predetermined condition is one of any of the following: an application-specific constraint is less than or equal to a threshold; or the driving parameter is equal to zero or is less than a threshold that approximates zero.

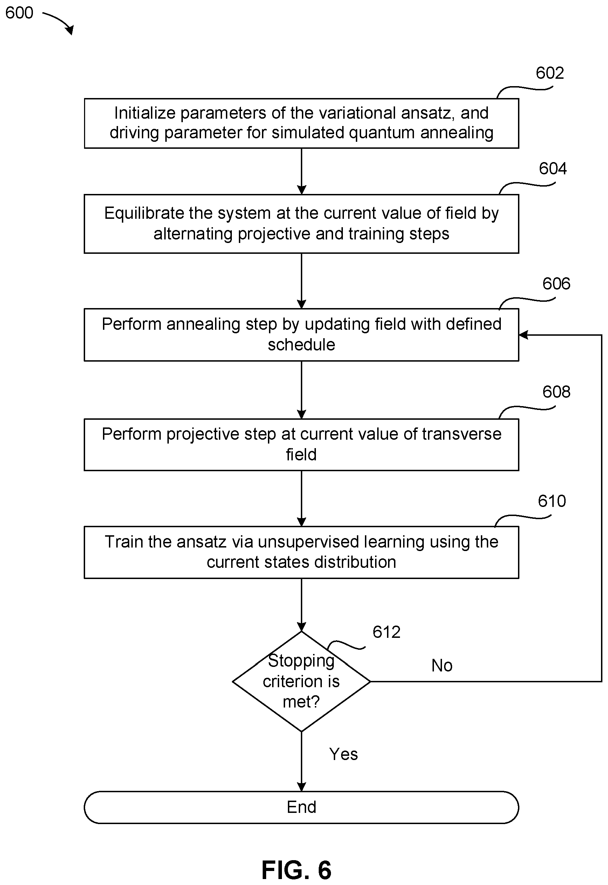

FIG. 6 is a flowchart of a method 600 for implementing simulated quantum annealing with on-the-fly training of the variational ansatz via unsupervised learning in accordance with an example embodiment of the present disclosure. The method 600 is alternative implementation of SQA with PQMC simulations in variational ansatz is not pretrained. Pilati, E. M. Inack, and P. Pieri, in Self-learning projective quantum Monte Carlo simulations guided by restricted Boltzmann machines, Phys. Rev. E 100, 043301, 2 October 2019, which is incorporated by reference, teach performing PQMC simulations guided by an adaptive wave function based on a Restricted Boltzmann Machine (RBM). The method 600 adapts and extends self-learning PQMC simulations to autoregressive recurrent neural networks which are more powerful neural networks compared to RBMs, which allow for exact sampling, an advantageous property when solving challenging optimization problems in which methods based on Markov chains suffer from very long auto-correlation time. The method 600 is also adapted to solve real-world optimization problems through simulated quantum annealing with arbitrary qudit quantum optimization Hamiltonians.

At step 602, the driving term for SQA is initialized similar to step 502 of the method 500 except that instead of initializing the variational ansatz with pretrained parameters, they are randomly initialized.

Similar to step 504 of the method 500, the system needs to be prepared in the ground state of the quantum optimization Hamiltonian with the initial driving term through an equilibration process. However, in step 604 the equilibration process is a gradual iteration over a two-step process made up of a projective and a training step. The projective step performs PQMC simulations with the initial value of the variation parameters of the ansatz fixed. The variational ansatz parameters are modified during the training step which consists of an unsupervised learning protocol. The negative log-likelihood based on the distribution of copies of the systems or walkers coming from the previous PQMC projective step is minimized over a certain number of steps to update the parameters of the variational ansatz.

An important aspect of autoregressive models compared to energy-based models such as RBMs is that they are by construction normalized. This allows for a straightforward computation of the negative log-likelihood, thus significantly speeding up the training process. Notwithstanding this, in the embodiments of the present disclosure RBMs could be used by using the Block-Gibbs sampling procedure described in *Self-learning projective quantum Monte Carlo simulations guided by restricted Boltzmann machines,* referenced above.

Once the system has equilibrated, the annealing process begins at step 606. The driving term is reduced in a manner the same as or similar to step 506 of the method 500. Next, at step 608, a projective step is carried out for the modified value of the quantum optimization Hamiltonian for a number of Monte Carlo steps. The number of Monte Carlo steps is typically an hyperparameter, and ideally should be set to converge to the ground state energy of the current quantum optimization Hamiltonian (that is, the current ground state energy should ideally converge to its expected value). However, the number of Monte Carlo steps may be user-defined, and for computational efficiency users may use a predetermined number of Monte Carlo steps to place a limit on computational time for cost or expediency.

Next, at step 610, the ansatz is trained via unsupervised learning using the last distribution of walkers. In some examples, the training step 610 comprises performing one or several gradient descent steps on the plurality of parameters based on the cost function input values.

In some examples, the gradient descent optimization is performed using the stochastic gradient descent method or a variant thereof. An example of a suitable variant is the Adam method for stochastic optimization, as described by Diederik P. Kingma and Jimmy Ba in Adam: A Method for Stochastic Optimization, arXiv: 1412.6980, 15 pages, 30 Jan 2017, the content of which is incorporated herein by reference. In at least some examples, the gradient descent optimization is performed using the stochastic gradient descent method or a variant (or alternative) thereof.

In some examples, the gradient is computed using automatic differentiation accelerated on dedicated hardware. In some examples, the cost function is one of the following: the expectation value of the current value of the quantum optimization Hamiltonian over the variational ansatz with or without its variance; or the negative log-likelihood of the current input states.

In some examples, the trained variational ansatz is used for future sampling which comprises using the variational ansatz as an on-demand sampler for generating optimal solutions for the optimization problem.

The steps 606, 608, and 610 are iteratively repeated until a stopping criterion is met (decision block 612). The stopping criteria can be, for example, when the driving term in the quantum optimization Hamiltonian reaches zero or a very small value.

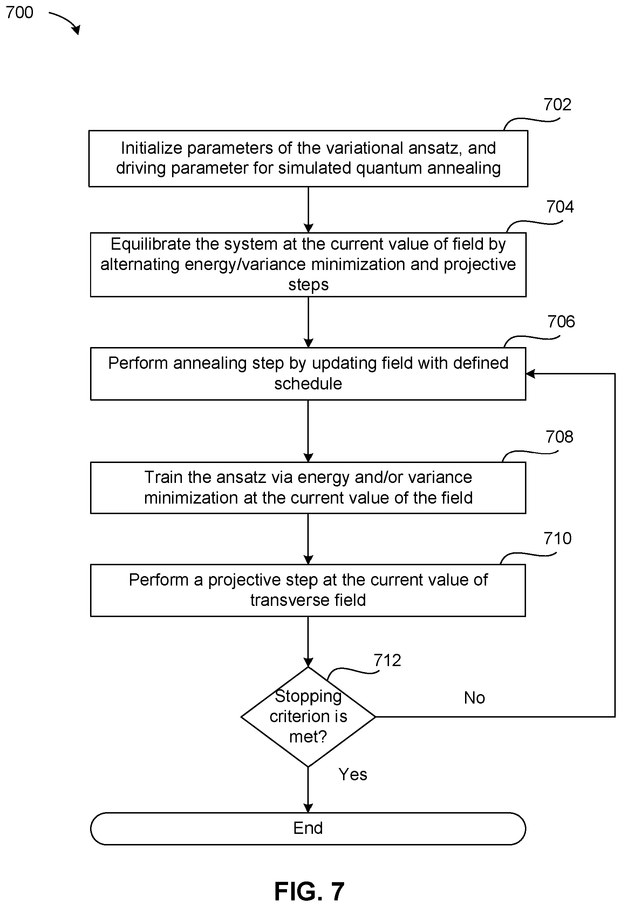

The method 600 illustrates how to implement SQA by augmenting PQMC with a variational ansatz that is trained via unsupervised learning. FIG. 7 is a flowchart of a method 700 for implementing simulated quantum annealing with on-the-fly training of the variational ansatz using energy and/or variance minimization methods/techniques in accordance with an example embodiment of the present disclosure. In the method 700, the ansatz is not trained on data but through variational minimization techniques.

At step 702, the driving term of the Hamiltonian and the ansatz trainable parameters are initialized similar to step 602.

Next, at step 704 an equilibrium step is performed which encompasses a training step followed by a projective step. However, in contrast to the equilibrium procedure of step 604 of the method 600, the training step is performed by minimizing the energy with or without the variance of the expectation value of the quantum Hamiltonian over the variational ansatz. This is possible since both metrics have well-defined lower bounds. For the variational energy it is the ground state energy of the current value of the quantum optimization Hamiltonian, and for the variance it is essentially zero thanks to the zero-variance principle. The expectation values are taken over samples generated from the ansatz. For generic artificial neural networks, Markov Chain Monte Carlo can be used to generate the samples. The preferred artificial neural networks for this embodiment are autoregressive recurrent neural networks, for which exact sampling can be applied, thus speeding up the training process.

After the equilibration, an annealing step 706 is performed the same as or similar to the annealing step 506 of the method 500, followed by a training step, where the variational ansatz is updated using the modified quantum optimization Hamiltonian via variational minimization techniques.

At step 708, the trained variational ansatz is used as a guiding wave function to perform PQMC simulations at the current value of the quantum optimization Hamiltonian.

Next, at step 710, a projective step is carried out at the current value of transverse field.

The steps 706, 708, and 710 are iteratively repeated until a stopping criterion is met (decision block 712). The stopping criteria can be, for example, when the driving term in the quantum optimization Hamiltonian reaches zero or a very small value.

A peculiarity and advantage of the methods described is provided by the use of automatic differentiation (AD) for fast and highly scalable computations of partial derivatives in continuous optimization problems. Not only can be AD to compute partial derivatives of variational parameters during the training step, it can also be used to compute first and second-order partial derivatives of the variational ansatz over the configurations x. These can be used to calculate forces and local energies needed in the PQMC simulations respectively, and this for arbitrary variational ansatzes.

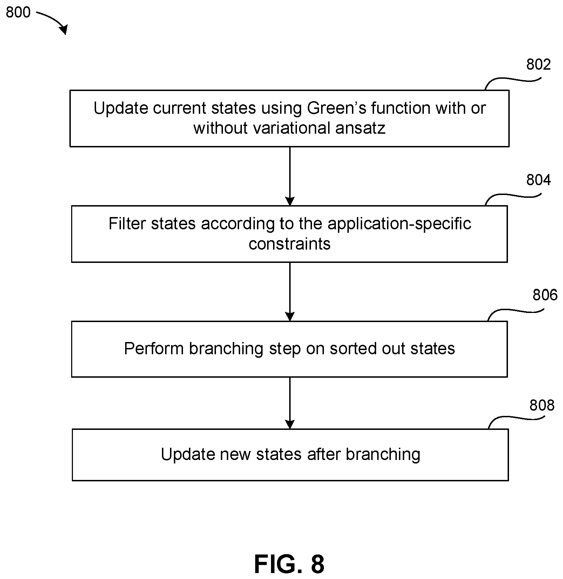

FIG. 8 is a flowchart of a method 800 for implementing the projective step of the projective quantum Monte Carlo method in accordance with an example embodiment of the present disclosure. The method 800 illustrates an example method for implementing the projective step of the PQMC method. In step 802, the current states of the system are updated using the Green's function of the kinetic part of the quantum optimization Hamiltonian. The states can be the position configuration $x$ in for the continuous case or a spin configuration $|\sigma\rangle$ in for the discrete case. The specific form of the Green's function depends on whether or not importance sampling is used. In some examples, the projective step comprises a plurality of move and branching steps generated by iterative solving the following modified imaginary-time Schrödinger equation:

$$f(x, \tau + \Delta\tau) = \sum_{x'} G(x, x', \Delta\tau) f(x', \tau).$$

Where $f(x, \tau)$ is the product of the guiding wavefunction and the ground state wave function of the corresponding quantum optimization Hamiltonian at imaginary time $\tau$, $G(x,x',\Delta\tau)= G_T(x, x',\Delta\tau)b_{x'}$ is the Green's function of the modified imaginary-time Schrödinger equation, wherein $G_T$ is a transition matrix $G_T(x, x', \Delta\tau)$ and $b_{x'} = \Sigma_x G(x, x', \Delta\tau)$ a normalization term.

At step 804, the updated states are filtered so that only states within the application-specific constraints remain. The application-specific constraints may be, for example, diversification constraints in the case of financial portfolio optimization, examples of such states being given above. Step 804 is the move step wherein, in some examples, the transition matrix $G_T(x, x', \Delta\tau)$ as a stochastic matrix defining the kinetic operator Green's function part of the quantum optimization Hamiltonian to simulate imaginary-time dynamics. The move step is constrained to meet one or more domain application constraints.

At step 806, a branching step is performed. In some examples, the branching step uses the normalization term of the Green's function $b_{x'}$ to implement a birth-death process that effectively simulates quantum tunneling effects. States (walkers) are proliferated or annihilated depending on the classical part of the Green's function of the quantum optimization Hamiltonian. Through this process that the quantum tunneling effect is mimicked in the PQMC algorithm.

At step 808, a new population of states (walkers) is updated after branching.

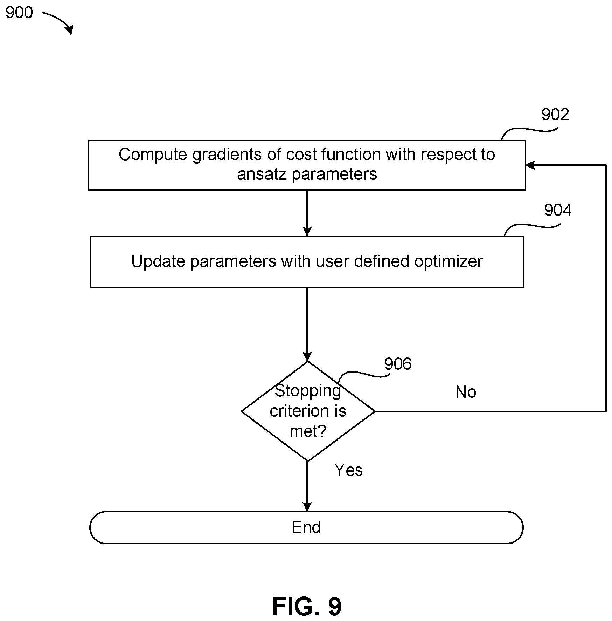

FIG. 9 is a flowchart of a method for implementing the training step in simulated quantum annealing in accordance with an example embodiment of the present disclosure. In step 902, the gradients of the cost function with respect to the variational ansatz parameters are computed. The cost function is the negative log-likelihood in the method 600 and the variational energy with or without its variance in the method 700. At step 904, the parameters of the variational ansatz are updated, for example, with a user-defined optimizer. The optimizer can be batch-gradient descent, stochastic gradient descent or one of its variants, or stochastic reconfiguration. The steps 902 and 904 are iteratively repeated, many gradient descent steps are performed, until a stopping criterion is met (decision block 906). The stopping criterion can be a definite number of training steps, a tolerance related to the variance of the cost function or an early stopping criterion.

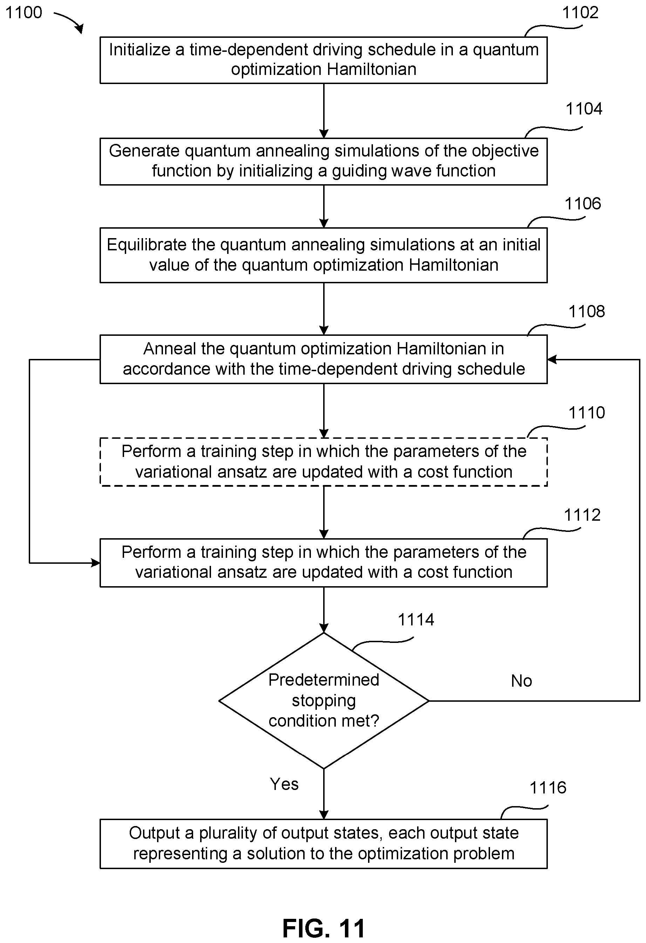

FIG. 11 is a flowchart of a method of simulated quantum annealing in accordance with another example embodiment of the present disclosure. At step 1102, a time-dependent driving schedule in a quantum optimization Hamiltonian is initialized. The quantum optimization Hamiltonian comprises an objective function corresponding to an optimization problem represented as a classical Hamiltonian and a non-commutating driving term causing quantum fluctuations.

At step 1104, quantum annealing simulations of the objective function are generated by initializing a guiding wave function. The guiding wave function may be initialized with a variational ansatz.

At step 1106, the quantum annealing simulations are equilibrated at an initial value of the quantum optimization Hamiltonian.

At step 1108, the quantum optimization Hamiltonian is annealed in accordance with the time-dependent driving schedule. In some examples, the annealing step 1108 comprises setting the driving parameter of the quantum optimization Hamiltonian to zero or a threshold that approximates zero.

At step 1112, a projecting step is performed in which quantum states having an energy level more than a threshold amount above the expectation value of the quantum optimization Hamiltonian corresponding to its ground state energy are removed. In some examples the projective step comprises a plurality of move and branching steps generated by iterative solving the following modified imaginary-time Schrödinger equation:

$$f(x, \tau + \Delta\tau) = \sum_{x'} G(x, x', \Delta\tau) f(x', \tau)$$

where $f(x, \tau)$ is the product of the guiding wavefunction and the ground state wave function of the corresponding quantum optimization Hamiltonian at imaginary time $\tau$, $G(x, x', \Delta\tau)= G_T(x, x',\Delta\tau)b_{x'}$ is the Green's function of the modified imaginary-time Schrödinger equation, wherein $G_T$ is a transition matrix $G_T(x, x', \Delta\tau)$ and $b_{x'} = \Sigma_x G(x, x', \Delta\tau)$ a normalization term.

In some examples the move step uses the transition matrix $G_T(x, x', \Delta\tau)$ as a stochastic matrix defining the kinetic operator Green's function part of the quantum optimization Hamiltonian to simulate imaginary-time dynamics.

In some examples, wherein the move step is constrained to meet one or more domain application constraints.

In some examples, the branching step uses the normalization term of the Green's function $b_{x'}$ to implement a birth-death process that effectively simulates quantum tunneling effects.

Steps 1108 and 1112 are iteratively repeated until a predetermined condition is met (decision block 1114). In some examples, the predetermined condition is one of any of the following: an application-specific constraint is less than or equal to a threshold; or the driving parameter is equal to zero or is less than a threshold that approximates zero. In some examples, wherein the threshold amount approximates the difference between a first non-degenerate excited state energy (E1) and a ground state energy (E0).

At step 1116, a plurality of output states is output responsive to the predetermined condition being met, each output state representing a solution to the optimization problem of the application-specific parameters within the application-specific constraints.

In some examples, a pre-trained time-dependent variational ansatz or a constant ansatz used for importance sampling. In other examples, the variational ansatz parameters are initialized randomly, the method further comprises the step 1110 of performing a training step in which the parameters of the variational ansatz are updated with a cost function. In such examples, step 1114 comprises iteratively repeating steps 1108, 1110 and 1112 until the predetermined condition is met.

In some examples, the training step is performed using unsupervised learning.

In some examples, the training step is performed using variational optimization methods.

In some examples, the training step comprises performing one or several gradient descent steps on the plurality of parameters based on the cost function input values.

In some examples, the gradient descent optimization is performed using the stochastic gradient descent method or a variant thereof. An example of a suitable variant is the Adam method for stochastic optimization, as described by Diederik P. Kingma and Jimmy Ba in Adam: A Method for Stochastic Optimization, arXiv: 1412.6980, 15 pages, 30 Jan 2017, the content of which is incorporated herein by reference.

In some examples, the gradient is computed using automatic differentiation accelerated on dedicated hardware.

In some examples, the cost function is one of the following: the expectation value of the current value of the quantum optimization Hamiltonian over the variational ansatz with or without its variance; or the negative log-likelihood of the current input states.

In some examples, the trained variational ansatz is used for future sampling which comprises using the variational ansatz as an on-demand sampler for generating optimal solutions for the optimization problem.

Although the foregoing description describes examples of solving optimization problems with respect to financial portfolio optimization, it will be appreciated that the method of the present disclosure can be applied to generic optimization problems in the specific application domain of finance as well as optimization problems in other application domains. For example, that the method of the present disclosure can be applied to optimization problems relating to the allocation of other resources include, but are not limited to, the allocation of network bandwidth to nodes and/or user equipment in a communication network (such as a wireline or cellular network) to conserve/minimize bandwidth, the allocation frequencies to nodes and/or user equipment to achieve predetermined objectives or constraints and/or minimize interference, the allocation of processing resources to nodes and/or computing devices (such those of a data processing farm or "cloud computing" server farm) to conserve/minimize computing power and/or energy consumption, the allocation of processing resources to nodes and/or computing devices in a largescale neural network to conserve/minimize computing power and/or energy consumption or achieve predetermined objectives or constraints, the allocation of utilities such as water or electricity to homes to minimize costs and/or consumption, the allocation of energy in a grid to minimize costs, consumption and/or loss/wastage, the allocation of loads (cargo containers and the like) or transportation assets (freight trucks, boats, planes and the like) to solve scheduling problems in the transportation/logistics industries, and the allocation of airplanes to solve scheduling problems in the aviation industry.

<u>General</u>

Although example embodiments may describe methods with steps in a certain order, one or more steps of the methods may be omitted or altered as appropriate. The example methods described herein may be modified by substituting, reordering, or adding steps to the disclosed methods, as appropriate. The coding of software for carrying out the above-described methods described is within the scope of a person of ordinary skill in the art having regard to the present disclosure.

Although the present disclosure is described at least in part in terms of methods, a person of ordinary skill in the art will understand that the present disclosure is also directed to the various elements for performing at least some of the aspects and features of the described methods, be it by way of hardware, software or a combination thereof. Accordingly, the technical solution of the present disclosure may be embodied in a non-volatile or non-transitory machine-readable medium (e.g., optical disk, flash memory, etc.) having stored thereon executable instructions tangibly stored thereon that enable a computing device to execute examples of the methods disclosed herein.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components.

Numerous specific details are set forth to provide a thorough understanding of the example embodiments described herein. However, it will be understood by those of ordinary skill in the art that the example embodiments described herein may be practiced without some of these specific details. Furthermore, well-known methods, procedures, and elements have not been described in detail so as not to obscure the example embodiments described herein.

The present disclosure may be embodied in other specific forms without departing from the subject matter of the claims. The described example embodiments are to be considered in all respects as being only illustrative and not restrictive. Modifications, substitutions, additions, and other implementations of the example embodiments are possible. The scope of the present disclosure is, therefore, described by the appended claims rather than by the foregoing description. The scope of the claims should not be limited by the embodiments set forth in the examples but should be given the broadest interpretation consistent with the description as a whole. The present disclosure intends to cover and embrace all suitable changes in technology.

Selected features from one or more of the above-described embodiments may be combined to create alternative embodiments not explicitly described, features suitable for such combinations being understood within the scope of example embodiments. Features from one or more of the above-described embodiments may be selected to create alternate embodiments comprised of a subcombination of features which may not be explicitly described above. In addition, features from one or more of the above-described embodiments may be selected and combined to create alternate embodiments comprised of a combination of features which may not be explicitly described above. Features suitable for such combinations and subcombinations would be readily apparent to persons skilled in the art upon review of the present disclosure as a whole.

The foregoing description refers to documents, datasets, programs/applications and/or code, the content of which is incorporated herein by reference in their entirety.

**Claims**

1. A computer-implemented method for solving an optimization problem using simulated quantum annealing algorithm, wherein the computer-implemented method is performed using a classical computing device, the method comprising:

   receiving a plurality of application-specific parameters of an objective function representing the optimization problem in terms of an energy function, each of the application-specific parameters having application-specific constraints, preferably each output state defines a value for each of the application-specific parameters within the application-specific constraints;
   receiving a plurality of initial input values within the application-specific constraints;
   performing simulated quantum annealing by:

      generating quantum annealing simulations of the objective function by initializing a guiding wave function with a variational ansatz, wherein the guiding wave function represents a ground state wave function of a quantum optimization Hamiltonian, wherein the quantum optimization Hamiltonian comprises the objective function represented as a classical Hamiltonian and a non-commutating driving term causing quantum fluctuations;
      stochastically evolving the quantum annealing simulations under a time-dependent driving schedule according to an imaginary-time Schrödinger equation supplemented by the guiding wave function until a predetermined condition is met; and
      outputting a plurality of output states responsive to the predetermined condition being met, each output state representing a solution to the optimization problem of the application-specific parameters within the application-specific constraints; and

   selecting an output state from the plurality of output states according to the application-specific constraints; and optionally applying the output state to a system associated with the optimization problem.

2. The method of claim 1, wherein the step of performing simulated quantum annealing comprises:

(i) initializing a time-dependent driving schedule in the quantum optimization Hamiltonian;

(ii) generating quantum annealing simulations of the objective function by initializing the guiding wave function;

(iii) equilibrating the quantum annealing simulations at an initial value of the quantum optimization Hamiltonian;

(iv-1) annealing the quantum optimization Hamiltonian in accordance with the time-dependent driving schedule;

(v) performing a projecting step in which quantum states having an energy level more than a threshold amount above the expectation value of the quantum optimization Hamiltonian corresponding to its ground state energy are removed;

(vi) iteratively repeating steps (iv-1) and (v) until the predetermined condition is met; and

(vii) outputting a plurality of output states responsive to the predetermined condition being met, each output state representing a solution to the optimization problem of the application-specific parameters within the application-specific constraints.

3. The method of claim 2, wherein:
   a pre-trained time-dependent variational ansatz or a constant ansatz is used for importance sampling.

4. The method of claim 2, wherein the variational ansatz parameters are initialized randomly, the method further comprising:

   (iv-2) performing a training step in which the parameters of the variational ansatz are updated with a cost function; and

   wherein, step (vi) comprises iteratively repeating steps (iv-1), (iv-2), and (vi) until the predetermined condition is met.

5. The method of claim 4, wherein:

   the training step is performed using unsupervised learning;

   the training step is performed using variational optimization methods; or

   the training step comprises performing one or several gradient descent steps on the plurality of parameters based on the cost function input values, preferably the gradient descent optimization is performed using the stochastic gradient descent method or a variant thereof, and preferably the gradient is computed using automatic differentiation accelerated on dedicated hardware.

6. The method of claim 4 or claim 5, wherein the cost function is one of the following:

   the expectation value of the current value of the quantum optimization Hamiltonian over the variational ansatz with or without its variance; or

   the negative log-likelihood of the current input states.

7. The method of any one of claims 4 to 6, wherein the trained variational ansatz is used for future sampling which comprises using the variational ansatz as an on-demand sampler for generating optimal solutions for the optimization problem.

8. The method of any one of claims 1 to 7, wherein:

   the objective function is a continuous objective function or a discrete objective function depending on a specific domain application of the objective problem;

   the quantum annealing simulation is performed in accordance with a projective quantum Monte Carlo (PQMC) simulation; and/or

   the quantum optimization Hamiltonian is represented by qudits, thereby providing increased compression of the optimization problem and an efficient exploration of the solution space.

9. The method of any one of claims 1 to 8, wherein the guiding wave function is provided by:

   a constant wave function;

   a mean field wave function;

   a product of Gaussian wave functions;

   a Jastrow wave function; or

   a neural network wave function, preferably the neural network wave function is an autoregressive recurrent neural network, and preferably the autoregressive recurrent neural network comprises: a normalizing flow autoregressive recurrent neural network or a variant thereof for a continuous optimization problem; or a recurrent neural network or a variant thereof for a discrete optimization problem.

10. The method of claim 2, wherein equilibrating the system comprises iteratively implementing one of the following:

a projective step comprising removing quantum states having an energy level more than a threshold amount above the expectation value of the quantum optimization Hamiltonian corresponding to its ground state energy until the expectation value of the quantum optimization Hamiltonian converges to a given value;

a projective step comprising removing quantum states having an energy level more than a threshold amount above the expectation value of the quantum optimization Hamiltonian corresponding to its ground state energy followed by a training step using as a cost function the negative log-likelihood until the expectation value of the quantum Hamiltonian converges to a given value; or

a training step using variational optimization followed by a projective step comprising removing quantum states having an energy level more than a threshold amount above the expectation value of the quantum optimization Hamiltonian corresponding to its ground state energy until the expectation value of the quantum Hamiltonian converges to a given value.

11. The method of claim 2, wherein the step of annealing comprises setting the driving parameter of the quantum optimization Hamiltonian to zero or a threshold that approximates zero.

12. The method of claim 2, wherein the projective step comprises a plurality of move and branching steps generated by iterative solving the following modified imaginary-time Schrödinger equation:

$$f(\boldsymbol{x}, \tau + \Delta\tau) = \sum_{\boldsymbol{x}'} G(\boldsymbol{x}, \boldsymbol{x}', \Delta\tau) f(\boldsymbol{x}', \tau)$$

where $f(\boldsymbol{x}, \tau)$ is the product of the guiding wavefunction and the ground state wave function of the corresponding quantum optimization Hamiltonian at imaginary time $\tau$, $G(\boldsymbol{x}, \boldsymbol{x}', \Delta\tau) = G_T(\boldsymbol{x}, \boldsymbol{x}', \Delta\tau) b_{\boldsymbol{x}'}$ is the Green's function of the modified imaginary-time Schrödinger equation, wherein $G_T$ is a transition matrix $G_T(\boldsymbol{x}, \boldsymbol{x}', \Delta\tau)$ and $b_{\boldsymbol{x}'} = \Sigma_{\boldsymbol{x}} G(\boldsymbol{x}, \boldsymbol{x}', \Delta\tau)$ a normalization term;

preferably the move step uses the transition matrix $G_T(\boldsymbol{x}, \boldsymbol{x}', \Delta\tau)$ as a stochastic matrix defining the kinetic operator Green's function part of the quantum optimization Hamiltonian to simulate imaginary-time dynamics;

preferably the move step is constrained to meet one or more domain application constraints; and

preferably the branching step uses the normalization term of the Green's function $b_{\boldsymbol{x}'}$ to implement a birth-death process that effectively simulates quantum tunneling effects.

13. The method of claim 2, wherein the predetermined condition is one of any of the following:

an application-specific constraint is less than or equal to a threshold; or

the driving parameter is equal to zero or is less than a threshold that approximates zero.

14. The method of claim 2, wherein the threshold amount approximates the difference between a first non-degenerate excited state energy (E1) and a ground state energy (F0).

15. A method of simulated quantum annealing, comprising:

(i) initializing a time-dependent driving schedule in a quantum optimization Hamiltonian, wherein the quantum optimization Hamiltonian comprises an objective function corresponding to an optimization problem represented as a classical Hamiltonian and a non-commutating driving term causing quantum fluctuations;

(ii) generating quantum annealing simulations of the objective function by initializing a guiding wave function;

(iii) equilibrating the quantum annealing simulations at an initial value of the quantum optimization Hamiltonian;

(iv-1) annealing the quantum optimization Hamiltonian in accordance with the time-dependent driving schedule;

(v) performing a projecting step in which quantum states having an energy level more than a threshold amount above the expectation value of the quantum optimization Hamiltonian corresponding to its ground state energy are removed;

(vi) iteratively repeating steps (iv-1) and (v) until the predetermined condition is met; and

(vii) outputting a plurality of output states responsive to the predetermined condition being met, each output state representing a solution to the optimization problem of the application-specific parameters within the application-specific constraints.

FIG. 1

101

Database
130

Training device
120

I/O interface 114/116

Processor(s) 102

Memory(ies) 108

Execution device 140

Data storage
system 150

**FIG. 2**

300

$\widetilde{w}_1$
314
$S$
312
RNN 350

$\widetilde{w}_2$
314
$S$
312
RNN 350

...

$\widetilde{w}_N$
314
$S$
312
RNN 350
374

⋮ ⋮ ⋮

RNN 350
RNN 350
...
RNN 350
372

RNN 350
RNN 350
...
RNN 350
370

310 $\widetilde{w}_0$

310 $\widetilde{w}_1$

310 $\widetilde{w}_{N-1}$

**FIG. 3**

400

| 402 |
| --- |
| Generate or receive objective function representing an optimization problem |

| 404 |
| --- |
| Receive initial input values |

| 408 |
| --- |
| Generate a simulation of the objective function by initializing a guiding wave function with a variational ansatz |

| 410 |
| --- |
| Stochastically evolve the quantum annealing simulations until a predetermined condition is met |

| 412 |
| --- |
| Output a plurality of output states, each output state representing a solution to the optimization problem |

| 414 |
| --- |
| Select an output state according to application-specific constraints |

| 416 |
| --- |
| Apply selected output state to real-world system associated with optimization problem |

# FIG. 4

FIG. 5

600

602

Initialize parameters of the variational ansatz, and driving parameter for simulated quantum annealing

604

Equilibrate the system at the current value of field by alternating projective and training steps

606

Perform annealing step by updating field with defined schedule

608

Perform projective step at current value of transverse field

610

Train the ansatz via unsupervised learning using the current states distribution

612

Stopping criterion is met?

No

Yes

End

FIG. 6

700

702

Initialize parameters of the variational ansatz, and driving parameter for simulated quantum annealing

704

Equilibrate the system at the current value of field by alternating energy/variance minimization and projective steps

706

Perform annealing step by updating field with defined schedule

708

Train the ansatz via energy and/or variance minimization at the current value of the field

710

Perform a projective step at the current value of transverse field

712

Stopping criterion is met?

No

Yes

End

**FIG. 7**

800

802

Update current states using Green's function with or without variational ansatz

804

Filter states according to the application-specific constraints

806

Perform branching step on sorted out states

808

Update new states after branching

**FIG. 8**

900

902

Compute gradients of cost function with respect to ansatz parameters

904

Update parameters with user defined optimizer

906

Stopping criterion is met?

No

Yes

End

**FIG. 9**

Computing Device 100

Processor(s) 102

Input device 114

Output device 116

I/O interface 104

Network interface 106

110

Memory(ies) 108

Data 109

Database 111

Instructions 113

SQA software
application 115

**FIG. 10**

**1100**

**1102**
Initialize a time-dependent driving schedule in a quantum optimization Hamiltonian

**1104**
Generate quantum annealing simulations of the objective function by initializing a guiding wave function

**1106**
Equilibrate the quantum annealing simulations at an initial value of the quantum optimization Hamiltonian

**1108**
Anneal the quantum optimization Hamiltonian in accordance with the time-dependent driving schedule

**1110**
Perform a training step in which the parameters of the variational ansatz are updated with a cost function

**1112**
Perform a training step in which the parameters of the variational ansatz are updated with a cost function

**1114**
Predetermined stopping condition met?

No

Yes

**1116**
Output a plurality of output states, each output state representing a solution to the optimization problem

**FIG. 11**

Europäisches
Patentamt

European
Patent Office

Office européen
des brevets

## EUROPEAN SEARCH REPORT

**Application Number**

EP 24 18 3694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/198246 A1 (HIBAT ALLAH MOHAMED [CA] ET AL) 23 June 2022 (2022-06-23) * paragraph [0070] - paragraph [0259]; figures 1-13 * | 1-15 | INV. G06N5/01 G06N10/80 G06N3/0442 G06N3/047 |
| X | MOHAMED HIBAT-ALLAH ET AL: "Variational Neural Annealing", ARXIV.ORG, CORNELL UNIVERSITY LIBRARY, 201 OLIN LIBRARY CORNELL UNIVERSITY ITHACA, NY 14853, 25 January 2021 (2021-01-25), XP081866831, * Sections II, III, V * * Appendix D * | 1-15 | G06N3/084 G06N3/088 ADD. G06N3/0455 G06N10/20 G06N10/60 |
| A | PILATI S ET AL: "Simulating disordered quantum systems via dense and sparse restricted Boltzmann machines", ARXIV.ORG, CORNELL UNIVERSITY LIBRARY, 201 OLIN LIBRARY CORNELL UNIVERSITY ITHACA, NY 14853, 21 March 2020 (2020-03-21), XP081626885, * the whole document * | 1-15 | |
| A | PILATI S ET AL: "Self-learning projective quantum Monte Carlo simulations guided by restricted Boltzmann machines", ARXIV.ORG, CORNELL UNIVERSITY LIBRARY, 201 OLIN LIBRARY CORNELL UNIVERSITY ITHACA, NY 14853, 1 July 2019 (2019-07-01), XP081388172, * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 11 December 2024 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3694

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| US 2022198246 A1 | 23-06-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREW LUCAS**. Ising formulations of many NP problems. *Front. Phys., Sec. Interdisciplinary Physics*, 12 February 2014, vol. 2, 15, https://doi.org/10.3389/fphy.2014.00005
- **M. H. KALOS** ; **P. A. WHITLOCK**. Monte Carlo Methods. John Wiley & Sons, 2008
- **SANDRO SORELLA** ; **FEDERICO BECCA**. SISSA Lecture notes on Numerical Methods for Strongly Correlated Electrons. *Scuola Internazionale Superiore Di Studi Avanzati - International School for Advanced Studies*, 21 June 2016
- **LORENZO STELLA** ; **GIUSEPPE E. SANTORO**. Quantum annealing of an Ising spin-glass by Green's function Monte Carlo. *Phys. Rev.*, 13 March 2007, vol. 75, 6, https://doi.org/10.1103/PhysRevE.75.036703
- **PILATI, E.** ; **M. INACK** ; **P. PIERI**. Self-learning projective quantum Monte Carlo simulations guided by restricted Boltzmann machines. *Phys. Rev. E*, 02 October 2019, vol. 100, 043301
- **DIEDERIK P. KINGMA** ; **JIMMY BA**. Adam: A Method for Stochastic Optimization. *arXiv: 1412.6980*, 30 January 2017, 15